(19) Europäisches Patentamt
European Patent Office
Office européen des brevets

(11) **EP 4 105 035 A1**

(12) **EUROPEAN PATENT APPLICATION**

(43) Date of publication:
**21.12.2022 Bulletin 2022/51**

(21) Application number: **21179385.6**

(22) Date of filing: **15.06.2021**

(51) International Patent Classification (IPC):
**B42D 25/324** (2014.01)     **B42D 25/351** (2014.01)
**B42D 25/36** (2014.01)     **B42D 25/378** (2014.01)
**B42D 25/382** (2014.01)     **B42D 25/387** (2014.01)

(52) Cooperative Patent Classification (CPC):
**B42D 25/324; B42D 25/351; B42D 25/36;**
**B42D 25/378; B42D 25/382; B42D 25/387**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(71) Applicant: **Karlsruher Institut für Technologie**
**76131 Karlsruhe (DE)**

(72) Inventors:
• **HOWARD, Ian**
  **76137 Karlsruhe (DE)**
• **DOTTERMUSCH, Stephan**
  **76185 Karlsruhe (DE)**
• **RICHARDS, Bryce**
  **76297 Stutensee (DE)**
• **KUMAR, Vinay**
  **76139 Karlsruhe (DE)**

(74) Representative: **Müller-Boré & Partner**
**Patentanwälte PartG mbB**
**Friedenheimer Brücke 21**
**80639 München (DE)**

(54) **LABEL AND SYSTEM FOR VERIFYING THE AUTHENTICITY OF ITEMS AND METHOD FOR VERIFYING AUTHENTICITY OF ITEMS**

(57)     The present invention relates to a label (1, 1', 1", 1''') for verifying authenticity of items, the label (1, 1', 1", 1''') being configured to be attached to items and comprising a plurality of focusing micro-optical elements (3) and a microparticle layer (5) comprising a plurality of luminescent and/or scattering microparticles (7), wherein the plurality of focusing micro-optical elements (3) and the microparticle layer (5) are arranged so that at least a part of light emitted and/or scattered from the plurality of luminescent and/or scattering microparticles (7) reaches the plurality of focusing micro-optical elements (3).

**Fig. 1A**

**Description**

The present disclosure relates to a label for verifying the authenticity of items, a system comprising the label, and a method for verifying authenticity of items.

The present disclosure relates to the technical field of a label for anti-counterfeiting and product authentication. Anti-counterfeiting is a global problem. Brand owners often apply advanced anti-counterfeiting techniques allowing verification of the authenticity of items or products, in order to protect against fake or unauthorized replicas of the authentic products. In one anti-counterfeiting technique, an item or product is associated with a digital identifier, which is encoded in a physical identifier. A label comprising the physical identifier is attached to the product. If the physical identifier is cloneable or reusable, counterfeit products could easily circumvent the anti-counterfeiting technique. Some labels for anti-counterfeiting rely on micron-scale features created at random during manufacturing. While this might bestow security, it adds complexity to the authentication process, and necessitates microscopic examination of the labels.

According to one aspect, it is an object to provide a label and a system comprising a label for verifying authenticity of items, wherein the label is easy to manufacture and easy to authenticate in the field. According to a further aspect, it is an object to provide a method for verifying authenticity of items using such a label.

These objects are solved by the subject matter of the independent claims. Further embodiments can be derived from the dependent claims.

According to an aspect, a label for verifying authenticity of items is provided, the label being configured to be attached to items and comprising a plurality of focusing micro-optical elements and a microparticle layer comprising a plurality of luminescent and/or scattering microparticles.

The microparticle layer may comprise a plurality of luminescent and/or scattering microparticles comprising one or more types of luminescent and/ or scattering microparticles. The plurality of luminescent and/or scattering microparticles may be randomly distributed in the microparticle layer, in particular randomly distributed on a micron scale. In other words, the exact positions of the microparticles within the microparticle layer may be non-predicable and non-reproducible during the manufacturing process of the microparticle layer. The distribution of the microparticles may be quasi-random. Accordingly, the microparticles may be randomly or stochastically positioned in the microparticle layer during the manufacturing process, so that the exact positions of the microparticles adjust stochastically, in particular on a micron scale.

The label comprises a plurality of focusing micro-optical elements, wherein the plurality of focusing micro-optical elements and the microparticle layer may be arranged so that at least a part of light emitted and/or scattered from the plurality of luminescent and/or scattering microparticles reaches the plurality of focusing micro-optical elements and/or a side of the label that is opposite to the plurality of focusing micro-optical elements. Thus, the focusing micro-optical elements may be configured and arranged with respect to the microparticle layer so as to assist or guide a part of the light emitted and/or scattered from some of the microparticles to reach an image capturing device, such as a smartphone camera. Conversely, the focusing micro-optical elements may be configured and arranged with respect to the microparticle layer so as to guide or focus incident illumination light on at least some of the microparticles. Finally, the focusing micro-optical elements may be configured and arranged so that they both focus incident illumination on some microparticles and assist or guide part of the emitted and/or scattered light to reach an image capturing device.

Due to the light focusing properties of the focusing micro-optical elements, illumination light passing through the focusing micro-optical elements can be focused on the subset of microparticles, so that the light intensity of the focused illumination light impinging on the microparticles of the subset is higher than an average light intensity of incident illumination light impinging on the focusing micro-optical element. Due to the focusing and scattering properties of the micro-optical elements, the emitted and/or scattered light from a microparticle at a specific position relative to the micro-optical elements allows that the intensity of light from such a microparticle reaching an image-capturing device is modified.

In particular, regarding the operation of the label, at least three alternative arrangements of an illumination device for excitation of the plurality of luminescent and/or scattering microparticles and an image capturing device for detection of light coming from the plurality of luminescent and/or scattering microparticles are possible.

In a first arrangement, the plurality of luminescent and/or scattering microparticles can be excited by light coming from an illumination device placed on the side of the label that is the side of the micro-optical elements (front side of the label), and the light emitted and/or scattered from the plurality of luminescent and/or scattering microparticles can be detected by an image capturing device that is placed on a side of the label that is opposite to the side of the micro-optical elements (i.e., back side of the label). In this first arrangement, at least a part of the excitation light coming from the illumination device passes through the focusing micro-optical elements before reaching the microparticle layer. In this first arrangement, as will be discussed in more detail below, excitation light coming from the illumination device can be focused on a subset of the luminescent and/or scattering microparticles by the focusing micro-optical elements (focused illumination of microparticles (front side illumination, back side detection)).

In a second arrangement, the plurality of luminescent and/or scattering microparticles can be excited by excitation light coming from an illumination device placed on the side of the label that is opposite to the side of the micro-optical elements, wherein the light emitted and/or scattered from the plurality of luminescent and/or scattering microparticles can be detected by an image capturing device that is placed on the side of the label that is the side of the micro-optical elements. In this second arrangement, the illumination device is placed on the microparticle layer side of the label (back side of the label), so that the excitation light does not pass the focusing micro-optical elements before reaching the microparticle layer. In the second arrangement, at least a part of the light emitted and/or scattered from the luminescent and/or scattering microparticles can pass through the focusing micro-optical elements before reaching the image capturing device, wherein the focusing micro-optical elements may serve to collimate the light emitted and/or scattered from the microparticles onto the image capturing device (micro-optical element assisted detection of light emitted and/or scattered from microparticles (back side illumination, front side detection)).

In a third arrangement, the plurality of luminescent and/or scattering microparticles can be excited by light coming from an illumination device placed on the side of the micro-optical elements, and the light emitted and/or scattered from the plurality of luminescent and/or scattering microparticles can be detected by an image capturing device that is also placed on the side of the micro-optical elements. In this third arrangement, the concepts of a focused illumination of microparticles and micro-optical element assisted detection of light emitted and/or scattered from microparticles can be combined (front side illumination and detection).

In other words, excitation of the plurality of luminescent and/or scattering microparticles can be done through a front of the label, i.e., through the micro-optical elements, whereas detection is done through a back of the label, i.e., from the microparticle layer side of the label. The opposite is also possible, i.e., excitation from the back and detection from the front of the label. Finally, it is also possible that the excitation and detection is done through the front of the label.

The plurality of focusing micro-optical elements may be configured as a focusing micro-optical element (FME) array. The FME array may comprise multiple optical lenses formed in a one-dimensional or two-dimensional array. The FME array may be arranged on the microparticle layer, which acts as a supporting substrate. The FME array may be laminated to or directly embossed into the microparticle layer. As will be described later, in addition to the FME array, additional micro-structuring of the surface to regionally alter the light-scattering properties of the surface may be employed, to modify the out-coupling of light scattered/emitted from the plurality of microparticles.

There is a 3D alignment, preferably on a micron scale, between the microparticles and the focusing micro-optical elements. Due to the random distribution of the microparticles in the microparticle layer, the 3D alignment is unique for each manufactured label. The 3D alignment on the micron scale makes it virtually impossible to purposefully reproduce the label. In other words, the micron-scale alignment of the microparticles and the focusing micro-optical elements cannot be reproduced during manufacture of the label, which results in a virtually unclonable label.

The micron-scale randomness in the distribution of the microparticles in the microparticle layer can be read out on a macroscopic scale using an image capturing device, e.g., a camera, or simply using the human eye. The camera may be a camera of a smartphone or mobile device. Depending on the 3D alignment of microparticles and focusing micro-optical elements, and, optionally, of the illumination device and of the image capturing device, light emitted and/or scattered from some of the microparticles may be coupled out of the label more efficiently than light emitted and/or scattered from other microparticles. In other words, some of the microparticles are aligned with the focusing micro-optical elements so that these microparticles appear brighter than the others, as verifiable by eye or with the image capturing device. Conversely, the subset of microparticles being aligned with the focusing micro-optical elements can be more effectively illuminated by incident illumination light resulting in a higher light intensity of light emitted or scattered from the microparticles of the subset.

Accordingly, the light intensity detected by an image capturing device of light originating from these microparticles having a specific 3D alignment with the focusing micro-optical elements is much higher than the detected light intensity of light originating from microparticles being misaligned with the micro-optical elements. In particular, as will be described in more detail below, a "bright" microparticle can occur when a focus of a focusing micro-optical element and the location of the microparticle substantially or fully overlap. Light from such microparticles may result in a region of pixels on a sensor of the image capturing device collecting light signals having values over a background detection threshold.

Due to the micron-scale randomness of the positions of the microparticles in the microparticle layer, light detected by the image capturing device originating from some of the microparticles will have light intensities being above the detection threshold of a sensor of the image capturing device, while light originating from "misaligned" microparticles may have light intensities below the detection threshold. Accordingly, due to the random distribution of the microparticles, only some of the focusing micro-optical elements will contribute to an image captured by the image capturing device, whereas other focusing micro-optical elements will not contribute to a detected pattern in the image. Accordingly, the detected pattern of light is characteristic for the label and is unique.

Additional security to the labels may be provided by the dependence of the pattern of bright microparticles on the conditions of the illumination, i.e., incidence angles, polarization, divergence of the light, and location of the image capturing device. Thus, a single label can have multiple patterns of bright particles depending on the illumination and detection conditions. The specification of one or more of these patterns under given illumination and detection conditions serves to authenticate the label, with comparison by eye or based on analysis of an image captured by an image capturing device.

Thus, a label is provided which is virtually unclonable due to random micron-scale distribution of the microparticles in the microparticle layer during the manufacturing process of the label, which results in a 3D alignment of microparticles and focusing micro-optical elements that cannot be reproduced purposefully in the manufacturing process and is unique for each label. This unique 3D alignment gives rise a unique detectable light signal (i.e., light pattern of bright microparticles) that can be detected on the macroscopic scale. Preferably, the light signal can be detected without any expensive and heavy microscopic equipment, in particular by a camera of mobile device such as a smartphone or tablet computer. Alternatively, the light signal can also be detected using the human eye.

Accordingly, the security of the label with respect to counterfeiting is ensured by the random micron-scale alignment between microparticles and focusing micro-optical elements, which is unique for each label so that it is virtually impossible to clone or purposefully reproduce the label. The light emitted and/or scattered from bright microparticles can be read out on the macroscopic scale as a point pattern with image capturing devices having focal lengths such as those found in cameras of mobile devices, such as smartphones. In particular, control of the spacing of the focusing micro-optical elements can ensure this.

Capturing the emitted and/or scattered light of the microparticles leads to an image with a few bright points on a dark background. Resembling star constellations, these patterns are unique, and easy to authenticate digitally or by eye. Moreover, as will be described in the following, the detected pattern changes with incidence angle (at a designed rate) as the foci of the focusing micro-optical elements shift and coincide with an entirely new subset of particles. The label may thus produce different patterns at different illumination and detection configurations. Authentication may require comparison of the patterns under multiple illumination conditions.

Combining robust microscopic security and macroscopic authentication, these labels are easy to create and to manufacture, easy to compare, and prohibitively difficult to counterfeit. Thus, a low-cost label is provided that can be easily read out without expensive and heavy detection equipment, such as by, e.g., a low-cost camera of a smartphone and an optional illumination source such as, e.g., a smartphone flash.

Each of the focusing micro-optical elements may have an optical axis, wherein the focusing micro-optical elements may be arranged in a micro-optical element plane such that angles between the optical axis of each of the focusing micro-optical elements and a normal direction of the micro-optical element plane are below 60°.

The angle between the optical axis of each of the focusing micro-optical elements and a normal direction of the micro-optical element plane may preferably be below 45°, more preferably below 30°, more preferably below 15°, more preferably below 5°. Most preferably, the optical axis is substantially parallel to a normal direction of the micro-optical element plane.

The optical axis may be a rotational symmetry axis of the focusing micro-optical elements around which the micro-optical elements exhibit some degree of rotational symmetry. The micro-optical element plane may be an imaginary flat two-dimensional plane cutting across each of the micro-optical elements, e.g., across the center of gravity or optical center or center of curvature or some other part of the micro-optical elements. The micro-optical elements may be arranged in a three-dimensional micro-optical element layer, which extends along the micro-optical element plane. The normal direction of the micro-optical element plane is a direction being perpendicular to the micro-optical element plane.

The focusing micro-optical elements may be arranged in a micro-optical element plane, wherein the microparticle layer may have a first surface facing the micro-optical element plane, wherein a normal direction of the first surface is substantially parallel to the normal direction of the micro-optical element plane.

The microparticle layer may also have a second surface facing away from the micro-optical element plane. The second surface may be arranged opposite to the first surface. A normal direction of the second surface may be substantially parallel to the normal direction of the micro-optical element plane. The first and second surfaces may be substantially flat. The normal directions of the first and second surfaces may be substantially parallel. The distance between the first and second surfaces in the normal direction thereof is the thickness of the microparticle layer. The focusing micro-optical elements may be arranged in a micro-optical element layer facing the first surface of the microparticle layer. The micro-optical element plane may be substantially parallel to a plane along which the microparticle layer extends.

The micro-optical elements can be embossed or imprinted on the microparticle layer. In particular, the micro-optical elements may be directly embossed into the microparticle layer by means of a forming tool and/or stamping tool. Alternatively, the micro-optical elements can be printed directly, e.g., by means of a 3D-printer, on the microparticle layer. The micro-optical elements and the microparticle layer may also be laminated together.

The microparticle layer may have a thickness between 10 and 20000 $\mu$m, preferably between 100 and 2000 $\mu$m, most preferably between 500 and 1500 $\mu$m.

This configuration and arrangement of the microparticle layer and the micro-optical elements advantageously allows light to effectively pass through the micro-optical elements to reach the microparticle layer, thus illuminating and exciting the luminescent and/or scattering microparticles that are located in or close to foci or focal points of the focusing micro-optical elements. In addition, the configuration and arrangement of the microparticle layer and the micro-optical elements advantageously allows light scattered or emitted from microparticles to pass through the micro-optical elements and reach an image-capturing device.

The focusing micro-optical elements may be converging lenses having positive optical power, wherein each of the focusing micro-optical elements has a focal length and being configured to focus light substantially travelling along the optical axis of the micro-optical element to a focus.

A focus or focal point of a focusing micro-optical element may be a point where parallel light rays incident on the focusing micro-optical element and travelling along the optical axis of the micro-optical element intersect after having passed the focusing micro-optical element. The plane perpendicular to the optical axis at the focal point is referred to as the focal plane.

The focal length of the focusing micro-optical elements may be defined as the reciprocal of the optical power of the micro-optical element. High optical power corresponds to a short focal length. The focal length may also be defined as the distance from a first principal plane of the lens to the focus for incoming collimated, i.e., parallel light rays travelling along the optical axis, taking the respective medium in which the light travels into account, in particular taking the refractive index of the medium including the microparticle layer into account.

The location of an actual focus of a focusing micro-optical element will depend on characteristics of the incident illumination light. For example, the position of the focus shifts with the incidence angle of incident illumination light with respect to the optical axis of the micro-optical element. The incidence angle maybe understood as the angle between a propagating direction of the incident illumination light and the optical axis of the micro-optical element. If the optical axis of the micro-optical element is arranged perpendicular to the micro-optical element plane, the incidence angle can also be understood as the angle between the normal direction of the micro-optical element plane and the propagating direction of incident illumination light. This may lead to a variation of the detected light pattern with the incidence angle of incident illumination light, resulting in an additional strong security feature of the label.

Conversely, considering the reverse optical path originating from a microparticle and passing through a focusing micro-optical element, light emitted and/or scattered from a microparticle located at or close to the focus of the micro-optical element can be guided by the micro-optical element to be efficiently coupled out of the label so that it can be readily detected by an image capturing device or by the human eye.

Subsets of the plurality of the luminescent and/or scattering microparticles may lie in the foci of the plurality of focusing micro-optical elements. The foci of the plurality of micro-optical elements may change with the characteristics of the incident or outcoupled emitted light, characteristics including angle and collimation. Therefore, the subset of the plurality luminescent and/or scattering microparticles located in a focus changes depending on the characteristics of the illumination light and/or the position and optical characteristics of the detector.

Since the geometrical length of a micro-optical element along its optical axis may not negligibly small, the refractions at its incoming and outgoing optical surfaces can sometimes not be accurately approximated by a single refraction on a single central optical (principal) plane in the so-called thin lens approximation. Accordingly, the optical characteristics of the focusing micro-optical elements may be better approximated by the so-called thick lens approximation using two principal planes. A first principal plane is a microparticle layer side principal plane that is located on the side of the micro-optical element facing the microparticle layer, and a second principal plane is located on the side facing away from the microparticle layer. A first focal distance (first focal length) may be defined as the distance between the first principal plane and the focus on the microparticle layer side for incident collimated (parallel) light travelling along the optical axis, wherein the refractive index of the material through which the light travels is taken into account. Preferably, both principal planes are parallel to the micro-optical element plane.

A divergent bundle of light rays originating from a focus or focal point located in the microparticle layer will be collimated by the lens so as to leave the lens as collimated parallel light rays. If, on the other hand, a bundle of parallel light rays travelling parallel to the optical axis of the lens is incident on the lens, the refracted light rays will intersect the optical axis at the focus or focal point on the microparticle side of the lens. Thus, if incoming collimated (parallel) light travelling along the optical axis is focussed to the focus on the side facing the microparticle layer, this conversely implies that light emitted from a microparticle located at the focus will be collimated to a parallel light beam by the micro-optical element.

The focus of a focusing micro-optical element may not necessarily be understood to be a strictly one-dimensional focal point but rather a three-dimensional focal volume $V_{focal}$ due to diffraction and possible aberrations and imperfections of the lens. For example, the focusing micro-optical element might exhibit spherical and chromatic aberration, astigmatism and/or coma.

The diffraction-limited focal volume $V_{focal}$ of a micro-optical element may be approximated by a spherical cylindrical volume having a base area of $\pi\left(\dfrac{d}{2}\right)^2$ and a cylinder length L perpendicular to the base area to be

$$V_{focal} = \pi \left(\frac{d}{2}\right)^2 L,$$

wherein d is the minimum diameter of the focal volume $V_{focal}$ in a plane perpendicular of the optical axis of the micro-optical element and L is the minimum length of the focal volume $V_{focal}$ over which the minimum diameter d is maintained. The diameter d is limited by diffraction and is an indication of the minimum lateral extension of the focal volume $V_{focal}$ perpendicular to the optical axis. The length L of the focal volume $V_{focal}$ is an indication of the minimum axial extension of the focal volume $V_{focal}$.

The plurality of focusing micro-optical elements may comprise focusing micro-optical elements having a predetermined number of different focal lengths, preferably three different focal lengths.

The average focal length of the plurality of focusing micro-optical elements is between 10 and 10000 $\mu$m, preferably between 100 and 1000 $\mu$m, most preferably between 200 and 800 $\mu$m. In case of lenses focusing to a point, the diameter of the micro-optical elements may be between 10 and 1000 $\mu$m, preferably between 100 and 500 $\mu$m. In addition, the height of the micro-optical elements may be between 10 and 500 $\mu$m, preferably between 50 and 400 $\mu$m. In case of lenses focusing to a line, the diameter of the micro-optical elements may be between 10 and 1000$\mu$m, preferably between 100 and 800 $\mu$m. In addition, the height of the micro-optical elements may be between 10 and 500 $\mu$m, preferably between 50 and 400 $\mu$m.

The lenses may be spherical lenses, wherein at least one of their surfaces has a spherical shape. For example, the lenses may be planoconvex lenses, wherein one of the surface of the lens which faces toward the microparticle layer may be flat, and the other surfaces facing away the microparticle layer may be convex. If the lens is planoconvex, a collimated beam of light passing through the lens converges to substantially to a spot or point, i.e., a focus, in the microparticle layer.

The lenses may have different radius of curvature so that incoming collimated (parallel) light travelling along the optical axis is focussed to a different focal plane or focus on the side facing the microparticle layer. This may be advantageous, since luminescent and/or scattering microparticles at different depths in the microparticle layer may be excited. Thus, using focusing micro-optical elements having different focal lengths in a single label might increase its security, since the 3D locations of the microparticles in the microparticle layer at different depths must be reproduced to counterfeit the label. This further complicates a counterfeiting attack based on a 2D printing method such as ink-jet printing.

Alternatively, all lenses may have the same focal length, in particular the same radius of curvature of the refractive surface(s), so that incoming collimated (parallel) light travelling along the optical axis is focussed to the same focal plane or focus on the side facing the microparticle layer.

The plurality of focusing micro-optical elements may comprise at least one of an aspherical lens, cylindrical lens, lenticular lens, best-form lens, and Fresnel lens. Cylindrical lenses may have curvature along only one axis. They may be used to focus light into a line. Lenticular lenses are arrays of microlenses that are used in lenticular printing to make images that have an illusion of depth or that change when viewed from different angles. A Fresnel lens has its optical surface broken up into narrow rings, allowing the lens to be much thinner and lighter than conventional lenses. Durable Fresnel lenses can be molded from plastic and are inexpensive. Best-form lenses may be advantageous since they are lenses in which both spherical aberration and coma are minimised while still using spherical surfaces to form the lens. They provide the best possible performance from a spherical lens for collimating and focusing beams.

The focusing micro-optical elements may have the same design or have multiple designs. In other words, the lenses forming the micro-optical elements may all be of the same type of lenses, e.g., spherical, cylindrical, lenticular, best-form, or Fresnel lenses. Alternatively, the lenses forming the micro-optical elements may be different ones of spherical, cylindrical, lenticular, best-form, or Fresnel lenses. Thus, the micro-optical elements may be chosen dependent on the dimension of the microparticle layer, so that the focal planes or foci may be located at different parts or depths of the microparticle layer.

At least some or all focusing micro-optical elements may be arranged such that the foci of the focusing micro-optical elements are located in the microparticle layer. The distance between the first surface of microparticle layer, i.e., the surface facing the micro-optical elements, and the first principal plane facing the microparticle layer which is the principal plane nearest to the microparticle layer is preferably less than the focal length of the micro-optical elements, preferably less than 0.8 times the focal length of the micro-optical elements.

Such a configuration allows to selectively illuminate or excite a subset of the luminescent and/or scattering microparticles. Alternatively, all luminescent and/or scattering microparticles might be homogeneously illuminated or excited, wherein only those microparticles contribute to the pattern of the detected image that are located at or close to the foci of the focussing micro-optical elements.

The microparticle layer may have a second surface facing away from the micro-optical element plane, wherein a distance between the second surface and a principal plane of the micro-optical elements is larger than the focal length of each of the focusing micro-optical elements.

In other words, the distance between the second surface and the micro-optical element plane may be larger than the focal length of each of the focusing micro-optical elements. The principal plane of the micro-optical elements may be the first principal plane facing the microparticle layer which is the principal plane nearest to the microparticle layer. Alternatively, the principal plane may be the second principal plane that is located on the side facing away from the microparticle layer. Accordingly, each of the focusing micro-optical elements has a focal length and is configured to focus parallel beams of incident light travelling along the optical axis of the micro-optical element to a focus that lies within the microparticle layer. Such a configuration allows to selectively illuminate or excite a subset of the luminescent and/or scattering microparticles within the microparticle layer. Alternatively, all luminescent and/or scattering microparticles might be homogeneously illuminated or excited, wherein only those microparticles contribute to the pattern of the detected image that are located at or close to the foci of the focussing micro-optical elements.

The plurality of micro-optical elements and the microparticle layer may be configured such that a probability $p$ for a microparticle being located in the vicinity of a focus or in a focal volume $V_{focal}$ of a given micro-optical element is lower than 0.9, and is preferably in the range from 0.01 to 0.8, more preferably in the range from 0.01 to 0.6.

The (mean) probability p can be controlled, for example, by the (doping) concentration of microparticles in the microparticle layer. As will be described later, the focal volume volume $V_{focal}$ may be the minimum focal volume resulting from diffraction. In a simple approximation, a microparticle can be considered to be located in the vicinity of the focus of a given micro-optical element, if the majority of the volume of the microparticle is located not further than 10%, preferably 5%, more preferably 2% of the focal length away from the focus or focal point. When the mean probability is within the above numerical boundaries, a unique and meaningful optical pattern of bright microparticles can be generated and detected.

In order to produce a meaningful optical pattern, the mean probability $p$ for a microparticle to be located in the vicinity of the focus of a given micro-optical element or in the focal volume $V_{focal}$ should not be 0. In that case, none of the microparticles would contribute to the optical pattern. At the same time, the mean probability for a microparticle being located in the vicinity of the focus of a given micro-optical element should not be 1. In that case, for each focussing micro-optical element, a microparticle would contribute to the optical pattern.

The plurality of focusing micro-optical elements and the microparticle layer may be configured such that a microparticle number density $N_p$ (i.e., the number of microparticles per volume) and the (desired) probability $p$ of a given focal volume $V_{focal}$ to be occupied by a microparticle satisfy the equations

$$\text{(equation i)} \qquad N_p = \frac{p}{V_{focal}} = p\,\frac{D^4}{8\lambda^3 F^4} \qquad if \qquad V_p < V_{focal}$$

and

$$\text{(equation ii)} \qquad N_p = \frac{p}{V_p} = \frac{3p}{2\pi d_p^3} \qquad if \qquad V_p > V_{focal},$$

wherein

$V_p$ is a microparticle volume,
$D$ is a diameter of a micro-optical element,
$F$ is the focal length of the micro-optical element,
$d_p$ is a diameter of microparticle, and
$\lambda$ is a wavelength of light of an illumination device.

Accordingly, the labels may be designed to have a specific probability $p$ of a microparticle occupying the focal volume in the microparticle layer. The procedure for deriving equations (i) and (ii) will be described in the following, wherein it will be assumed for simplicity that the microparticles are spherical having a diameter $d_p$ and a volume $V_p$. It will be further assumed that the maximum extension of the micro-optical element perpendicular to the optical axis thereof is given by $D$ and that the micro-optical element has the focal length $F$. The wavelength $\lambda$ of the light of the illumination device can be taken to be 450 nm for the purpose of this estimation. A wavelength of 450 nm is a good approximation of a flashlight of mobile devices, such as smartphones.

1. The minimum (lateral) diameter of the focal volume in a plane perpendicular to the optical axis of the micro-optical element can be approximated as follows:

For an incident plane wave, the diffraction-limited minimum diameter d of the focal volume (minimal lateral focal point size in the XY-plane) can be found in analogy to the *Abbe resolution* as:

$$d = 2\frac{\lambda F}{nD},$$

wherein the numeric aperture $NA = n\sin(\alpha) \approx \frac{nD}{2F}$ is used. The focal length $F$ can be related to the radius of curvature R of the micro-optical element and the index of refraction n of the material of the microparticle layer host, i.e., the index of refraction of the host material of the microparticle layer not taking the index of refraction of microparticles into account, by

$$F = R\,n/(n-1).$$

2. In analogy to Abbe's formula for the axial resolution of a microscope, the axial length $L$ along the optical axis (Z-axis) that this minimal lateral focal point size d is maintained can be estimated by

$$L = \frac{4n\lambda}{NA^2} = \frac{16\lambda F^2}{nD^2} = \frac{8dF}{D}$$

3. The diffraction-limited focal volume $V_{focal}$ can then be calculated as

$$V_{focal} = \pi\left(\frac{d}{2}\right)^2 L = \frac{16\lambda^3 F^4}{n^3 D^4}$$

4. The enhancement factor $E$ for the light emitted by linear emitter in the focal volume versus one not under a micro-optical element (i.e., micro-optical particle), estimated by $E = \left(\frac{D}{d}\right)^2,$ may be greater than 10 for the design.

5. The microparticle average size may be selected based on the desired rate of change of the central position of the focal area or the minimum diameter d of the focal volume in the XY plane, i.e, the plane perpendicular to the optical axis of the micro-optical element. This rate of change can be approximated as $dx \approx Fd\theta$. The particle diameter $d_p$ can be chosen to allow the label pattern to stay static over a given value of $d\theta$.

6. If the volume of a microparticle, $V_p = \frac{4}{3}\pi\left(\frac{d_p}{2}\right)^3,$ is smaller than or equal to the volume of the focus $V_{focal}$, then: A lens may be considered bright if a microparticle has its centre in the focal volume. The expected number of microparticles in a focal volume is equal to the probability of a given micro-optical element leading to a bright point

$$p = N_p V_{focal}$$

Rearranging for $N_p$ results in relation (i) as follows:

$$N_p(V_p < V_{focal}) = \frac{p}{V_{focal}} = p\frac{D^4}{8\lambda^3 F^4}$$

where $N_p$ is the number density of microparticles in the host (i.e., number of microparticles per volume), and $p$ is the desired probability of a given focal volume to be occupied by a microparticle.

7. If the volume of a microparticle $V_p$ is larger than the focal volume $V_{focal}$, then: The probability that the focal volume is occupied by a portion of a microparticle is just given by the overall volume fraction occupied by microparticles

$$p = N_p V_p$$

Rearranging for $N_p$ results in equation (ii) as follows:

$$N_p(V_p > V_{focal}) = \frac{p}{V_p} = \frac{3p}{2\pi d_p^3}$$

8. From the size and mass density of the microparticles, i.e., mass of a microparticle per microparticle volume $V_p$, and the mass density of the microparticle layer (or host), the appropriate weight fractions of microparticles and microparticle layer (or host) can be calculated based on $N_p$.

9. The design of the micro-optical elements can be further refined by considering a finite source size and replacing the diffraction limited diameter or radius of the focal volume above by the focal size due to the finite dimensions of the illumination source, i.e., $r_{focus} = \frac{F}{D_s} R_s$, where $D_s$ and $R_s$ are the distance and radius of the illumination source. To account for precise shapes of micro-optical elements, the focal volume can be calculated by wave optics simulations (in the case that the focal radius is diffraction limited) or ray optic simulations, in the case that the finite source size and spherical aberration lead to a larger focal radius than the diffraction consideration. The particle density can also be refined by Monte Carlo simulations to examine the probability of focal volume and particle overlap (and emission enhancement factor) in detail. This analytic approach, potentially refined by simulation, allow labels with desired characteristics in terms of fraction of micro-optical elements leading to bright points, and rate of change of pattern with input/detection conditions, to be fabricated.

When the above equations (i) and (ii) are met, a meaningful optical pattern of bright microparticles can be generated and detected resulting in a label being very difficult to clone. In particular, if the microparticle number density is too low, the average probability of having a microparticle in the vicinity of a focus of a focusing micro-optical element might be too small to produce a meaningful optical pattern. If the microparticle number density is too high, the (average) probability of having a microparticle in the vicinity of a focus of a focusing micro-optical element will be close to 1, so that substantially each micro-optical element will contribute to the optical pattern, which might not be meaningful either. However, a meaningful and unique optical pattern can be produced when the above relationships (i) and (ii) between the microparticle number density $N_p$ and the desired probability $p$ for a microparticle being located in a given focal volume $V_{focal}$ are met.

The plurality of focusing micro-optical elements may be arranged in a regular lattice pattern or with arbitrarily placed positions or in relation to fiducial markers.

The micro-optical elements may be arranged in an array having a grid or lattice structure. Each of the micro-optical elements may be arranged in a matrix structure being positioned in rows and columns having the same spacing from each other. For example, there might be an array of nine micro-optical elements being arranged in a 3 to 3 matrix along the micro-optical element plane, wherein there are equidistant spaces between the centers of the micro-optical elements. The center of the micro-optical element might be located on a central axis which is arranged in normal direction relative to the micro-optical element plane and might coincide with the center of gravity of the micro-optical element. Alternatively, the micro-optical elements may be arranged with arbitrarily placed positions. In that case, there is no regular lattice or grid pattern, and the centers of the micro-optical elements are not equidistantly spaced from each other. The centers might be randomly distributed. Arranging the focusing micro-optical elements in a regular lattice pattern might result in a detectable regular pattern of bright microparticles which can be easily analysed and processed. In particular, if the detectable pattern of bright microparticles is a substantially regular lattice pattern produced by the regular lattice pattern of micro-optical elements, wherein some lattice positions are bright while other lattice positions are dark, such a pattern can easily be associated with a digital code representing the detected pattern.

Alternatively, or in addition, the micro-optical elements may be placed in relation to fiducial markers in order to assist the construction of a digital code from the detected pattern. Fiducial markers may frame a region from where a pattern of binary digit or bits can be extracted. The fiducial markers may comprise luminescent and/or scattering material so that the fiducial markers are only visible when excited by the illumination device. The appearance of the label is thus not altered.

The microparticles may be inorganic or organic microparticles, for example, up-conversion microparticles and/or downshifting microparticles and/or persistent phosphorescence microparticles, and/or the microparticles may be nanocrystal microparticles.

The plurality of microparticles may comprise inorganic or organic microparticles, for example, up-conversion microparticles and/or downshifting microparticles and/or persistent phosphorescence microparticles, and/or the microparticles may comprise nanocrystal microparticles.

In particular, a large number of luminescent and/or scattering microparticles known in the prior art can be used. Examples are cited described in the following.

The microparticles may be up-conversion microparticles made from a phosphor or, alternatively, from a gadolinium oxysulphide host and doped with a near-infrared sensitizer such as ytterbium and a visible emitter such as erbium.

The microparticles may be luminescent showing upconverted or down-shifted emission. In particular, the microparticles may include up-conversion microparticles, such as up-conversion nanoparticles which have a high efficiency under multiphoton excitation. Up-converting nanoparticles are nanoscale particles having a diameter of 1 to 100 nm that exhibit photon up-conversion. In photon up-conversion, two or more incident photons of relatively low energy are absorbed and converted into one emitted photon with higher energy. Up-conversion nanoparticles possess high photochemical stability when excited by the light in the near-infrared part of the spectrum and can be easily identified due to being narrow and quite distant from each other with luminescence bands in the shortwave spectral range.

The microparticles may be made from a gadolinium oxysulphide host and doped with an ytterbium (NIR sensitizer) and erbium (visible emitter): $Gd_2O_2S{:}Yb,Er$. The distribution of diameters of the microparticles may be centred around 10 $\mu$m.

Inorganic phosphors that absorb in the NIR preferentially between 900 and 1000 nm or between 1400 nm and 1600 nm, and emit at one or multiple bands in the visible or NIR (preferentially between 400 and 900 nm) may be used as up-conversion microparticles. Preferential hosts include $Gd_{(2-x-y)}O_2S{:}Yb_x,Er_y$, where x and y are in the range 0 to 0.8, $Y_{(2-x-y)}O_2S{:}Yb_x,Er_y$, where x and y are in the range 0 to 0.8, $NaY_{(1-x-y)}F_4{:}Yb_x,Er_y$ where x and y are in the range 0 to 0.4, $Ca_{(1-x-y)}F_{(2+x+y)}{:}Yb_x,Er_y$ where x and y are in the range 0 to 0.4, $Ba_{(1-x-y)}F_{(2+x+y)}{:}Yb_x,Er_y$ where x and y are in the range 0 to 0.4, $Sr_{(1-x-y)}F_{(2+x+y)}{:}Yb_x,Er_y$ where x and y are in the range 0 to 0.4.

Thus, optical images with excellent contrast can be derived by a label comprising a microparticle layer with a plurality of up-conversion microparticles.

The microparticles may be downshifting microparticles. Inorganic phosphors that absorb (either through host or dopant absorption) in the UV-VIS spectrum at selected regions from 200 nm to 1000 nm, preferentially from 360 nm to 1000 nm, and emit at a longer wavelength region preferentially between 370 nm 1100 nm can be used us downshifting microparticles. Preferentially for mobile applications, phosphors tuned to absorb the light emitted from standard smartphone flashlights can be used. Commercial phosphors used for color conversion of blue LEDs (for example based on GaN or InGaN) that have peak emission between 430 and 470 nm are preferred. Examples of such downshifting phosphors include $Y_{3-x}Al_5O_{12}{:}Ce_x$ where x is in the range of 0 to 0.9, $K_2Si_{(1-x)}F_6Mn_x$ where x is in the range 0 to 0.3.

Thus, optical images with excellent contrast can be derived by a label comprising a microparticle layer with a plurality of downshifting microparticles.

The microparticles may be persistent phosphorescence microparticles. These microparticles may be inorganic phosphors whose emission can be easily measured at times exceeding 1 s after the time at which photoexcitation ceased. These can include $Gd_{2-x}O_2S{:}Eu_x$ where x is 0 to 0.4, $Y_2{-}xO_2S{:}Eu_x$ where x is 0 to 0.4, $Sr_{0.95}EU_{0.02}Dy_{0.03}Al_2O_4$, $Sr_{3.84}EU_{0.06}Dy_{0.10}Al_{14}O_{25}$.

Optical images with excellent contrast can be derived by a label comprising a microparticle layer with a plurality of persistent phosphorescence microparticles.

Also possible are organic light-emitting materials incorporated into a host can act as the light-emitting component. For example, organic molecules absorb in the UV-VIS spectrum at selected regions from 200 nm to 1000 nm, preferentially from 360 nm to 1000 nm, and emit at a longer wavelength region preferentially between 370 nm 1100 nm) can be used. Preferentially for mobile applications, dyes tuned to absorb the light emitted from standard smartphone flashlights can be used. Examples of such organic down shifting phosphors include coumarin 343, coumarin 6, coumarin 7, coumarin 314, nile red, neutral red, perylene-based dyes so that organic dyes form micron scale agglomerates. They can be joined together with a binder to form micron-sized particles before these are dispersed in the host matrix. The binder can be a polymer microbead.

Nanocrystals can also be used as the light-emitting component. Examples include core/shell quantum dots including $CuInS_2/ZnS$, and $InP/ZnS$ so that nanocrystals form micron-scale agglomerates. They can be joined together with a binder to form micron-sized particles before these are dispersed in the host matrix. The binder can be a polymer microbead.The nanocrystals may include $Gd_{2-x}O_2S{:}Eu_x$ where x is 0 to 0.4, $Y_{2-x}O_2S{:}Eu_x$ where x is 0 to 0.4, $Sr_{0.95}EU_{0.02}Dy_{0.03}Al_2O_4$, $Sr_{3.84}Eu_{0.06}Dy_{0.10}Al_{14}O_{25}$

Optical images with excellent contrast can be derived by a label comprising a microparticle layer with a plurality of microparticles comprising organic light-emitting materials or nanocrystals.

Thus, a wide range of phosphors can be used as microparticles to create the bright point pattern captured on the image capturing device.

The phosphor particles could comprise of inorganic materials with particles diameters preferentially above 500 nm. These inorganic phosphor particles can be created by solid-state reactions. The phosphor particles could also consist of organic dyes, mixtures of organic dyes, nanocrystals, mixtures of nanocrystals, or mixtures of organic dyes and nanocrystals held together with a binding matrix such that the particles of the binder containing organic dyes and/or nanoparticles have diameters above 500 nm. To prepare the particles of organic dyes and or nanocrystals in a binder, organic dyes and/or nanoparticles can be introduced to a binder material by appropriate solution or melt processing (solution-casting, extrusion). The size of the binder-containing particles can then be refined by appropriate methods including dicing/chopping, pelletizing, milling/grinding.

The phosphor particles with diameters preferentially greater than 500 nm can then be introduced to a matrix material to form the microparticle layer. This can be achieved by coextrusion in a melt-processible host, or through a film forming process on a substrate, e.g., printing or coating. The matrix material may react during or subsequently to the coating process, e.g., polymerizing around the phosphor particles. For example, melamine resin microspheres containing dyes can be created by acid-catalyzed hydrothermal polycondensation. Preferential scattering microparticles include $TiO_2$ and Silica, with commercial products based thereon commonly applied for light scattering in paints and lighting applications.

The microparticle layer may be a polymer layer, preferably an extruded layer or a cured layer, or a glass layer. The microparticle layer is preferably be made of a material being substantially transparent in the relevant wavelength range, so that the material only exhibits minor absorption of illumination light and of light originating from the luminescent and/or scattering microparticles. The material might be a viscous, curable medium. Also, thermosetting and thermoresistant polymer layers are conceivable.

The plurality of focusing micro-optical elements may be attached to, preferably laminated to, or directly embossed into, the microparticle layer. Preferably, the micro-optical elements are unitarily formed in the microparticle layer or integrally connected to the microparticle layer. This allows the label being produced by a simple and cost-effective process. In case of planoconvex lenses, the flat surface of the lens might be attached, preferably laminated, or directly embossed with one of the two opposing surfaces of the microparticle layer, so that the convex surface of the lens faces away from the microparticle layer.

In addition to the micro-optical elements, the label may comprise surface or (sub-surface) scattering textures. The surface textures or sub-surface scattering textures may be arranged in the vicinity of the micro-optical elements and/or on the first surface of the microparticle layer. Preferably, the surface textures are positioned between the micro-optical elements. These textures do not have a significant influence on focusing the incoming collimated (parallel) light travelling to foci on the side facing the microparticle layer. However, similar to the focusing micro-optical elements, the surface textures or extended micro-optical elements increase the collection of light emitted by a bright microparticle by the image capturing device. Accordingly, the surface textures may assist the light emitted or scattered from the microparticles to reach the camera. Thus, the collection of light emitted by bright particle is improved.

Surface textures may be particularly advantageous for outcoupling of light out of the label. In particular, when targeting the detection of the emission pattern from the same side as illumination (front side detection or third arrangement of the illumination device and image capturing device as described above), for example when using a smartphone for illuminating and detection, the focusing optics influence the detection of the luminescent light.

In the case for a smartphone, the image capturing device is positioned near the illumination device so that there is only a small distance between the illumination device, i.e., the smartphone flashlight, and the image capturing device, i.e., the smartphone camera. In order to properly capture light coming from inside the microparticle layer by the imaging capturing device, i.e., the smartphone camera, surface textures might be considered.

The surface texture might be configured as a second micro-optical element, preferably in the form of a ring micro-optical element, that is positioned around a first central micro-optical element. This "ring" micro-optical element may have a long focal length. As a consequence, it does not focus light inside the microparticle layer or host, thus, illumination of luminescent particles is only achieved with the central micro-optical element. Since the luminescent particles do not lie in the focus of the ring ML, emitted light is not perfectly collimated, but diverges. This allows detection over a variety of distances between illumination devices and image capturing devices. As an alternative to the ring micro-optical element a Fresnel-type lens might be used.

As an alternative to the ring micro-optical element, random surface roughness might be used, i.e., a rough surface surrounding the central micro-optical element. Rough surfaces, with feature sizes much larger than the wavelength, scatter light in all directions. The light emitted by the luminescent particle is scattered at the surface. A fraction of the emitted light will be incident on the image capturing device, independent of its position.

A second focusing optic, e.g., the ring micro-optical element, is preferentially employed, when the relative positions of the source and detector position of the detection system are known, i.e., the position of the image capturing device and the illumination device. The dimension of the second optical element may be of a similar scale to the central micro-optical element, with a diameter of up to 10000 $\mu$m and a height of up to 300 $\mu$m.

A rough surface, on the other hand, is more universally applicable. Light goes in all directions, special consideration about the illumination condition and detector position do not have to be made. But, since the emission is widely spread, less light reaches the detector in general. The surface roughness should be large with respect to the wavelength, but small with respect to the micro-optical element dimensions. Thus, typical feature sizes are 1 $\mu$m to 10 $\mu$m. The shape of the features that the rough surface is composed of is arbitrary. In particular, the shape may be that of a pyramid, a cone, a hemisphere, or a fully random structure. These structures can be created in a similar fashion to the micro-optical elements, for example by grey-scale lithography or replication of appropriate master structures by embossing.

It is conceivable that the microparticle layer may be created as a first layer, then a second, transparent layer without any microparticles may be created above the microparticle layer. In particular, the second, transparent layer may be arranged on the microparticle layer facing the first surface of the microparticle layer. Then, a third layer, e.g., the micro-optical element layer and/or the surface textures may be created on the second, transparent layer by laminating or embossing.

The label may comprise a substrate, wherein the microparticle layer may be disposed on the substrate. The substrate may be formed of glass, fabric, paper and/or metal. The substrate may have a thickness between 1 and 20000 $\mu$m, preferably between 10 and 2000 $\mu$m, most preferably between 500 and 1500$\mu$m.

The microparticle layer may be coated onto a substrate, such as glass, fabric, paper, or metal, by a process of choice (such as slot-die coating). The microparticle layer may also be configured as a microparticle thin film. The coated microparticle thin film can range from 1 to 20000 $\mu$m, most preferably between 500 and 1500$\mu$m .

Finally, the microparticles can be adhered to the substrate. The focusing micro-optical elements can be arranged on the microparticle layer by an appropriate technique. For example, the micro-optical elements can be directly embossed into the microparticle layer creating combined micro-optical elements unitarily formed in the microparticle layer. Alternatively, the micro-optical element layer can be laminated onto the microparticle layer or microparticle-adhered substrate. Alternatively, the micro-optical element layer can serve as a substrate onto which the microparticle layer or thin film is deposited. The micro-optical element layer may be of a polymer or glass.

According to a further aspect, a system for verifying authenticity of items is provided, the system comprising:

- at least one label in accordance with the previous aspect;
- an image capturing device configured to capture light being emitted and/or scattered from the luminescent and/or scattering microparticles to acquire at least one test optical image of the label; and
- an authenticity verification device configured to verify authenticity of the items by comparing the at least one test optical image with at least one reference optical image.

In particular, all features of the label in accordance with the previous aspect and their respective effects described above might also apply to the system for verifying authenticity of items.

The system may further comprise an illumination device configured to illuminate the label so as to excite and/or illuminate the luminescent and/or scattering microparticles.

The system comprises at least one label that might be attached to at least one item, the label comprising a plurality of focusing micro-optical elements and a microparticle layer comprising a plurality of luminescent and/or scattering microparticles.

By means of the illumination device, the label may be illuminated resulting in the luminescent and/or scattering microparticles emitting and/or scattering light. Illumination can take place by illumination light passing through the focusing micro-optical elements. The light emitted and/or scattered from the microparticles can be captured by the image capturing device. The focusing micro-optical elements can assist in capturing the light the light emitted and/or scattered from the microparticles.

The image capturing device may be placed on the same side as the illumination source.

For example, in a smartphone geometry, the smartphone device may represent the image capturing device and the illumination device. The flash (illumination source) and camera (image capturing device) are in the same plane and separated by approximately 1 cm, ray tracing simulations indicate that increases greater than one order of magnitude of the light collected by the image capturing device are possible by using large-area Fresnel lenses, light-scattering designs, or roughened surfaces. Alternatively, the image capturing device and the illumination device comprising an illumination source may be placed on opposing sides of the label.

The illumination device for excitation of the plurality of luminescent and/or scattering microparticles and the image capturing device for detection of light coming from the plurality of luminescent and/or scattering microparticles might be arranged according to the three alternative arrangements as described above with respect to the label in accordance with the previous aspect.

By means of the image capturing device, at least one test optical image may be captured and recorded. This test optical image may be compared with a reference optical image by means of the authenticity verification device to verify the authenticity of the items the label is attached to.

In order to read out the label, the label might be placed in a measurement apparatus. Specifically, the label might be held in a holding apparatus, e.g., a label holder, that is configured to position the label in different angles of rotation, e.g., at least two angles of rotation, with respect to the direction of the incident illumination light. The incident illumination light impinges on the microparticles through the focusing micro-optical elements. An optical system may condition the incident illumination light to control its divergence.

The emission from the microparticles may be measured by the image capturing device, e.g., a camera, after optical filters to block the excitation (illumination) light. If multiple luminescent microparticles are present in the label, each having a unique emission wavelength, additional filters and/or cameras can be used so that an image corresponding to emission from each type of luminescent microparticle can be taken.

The image capturing device may have a suitable lens system to image the micro-optical element array onto a photosensitive area of the camera. Systems of LEDs and/or lasers can be used for excitation. For down-shifting phosphors excitation sources peaking between 430 and 470 nm are preferred, such as that found in smartphone flashlights.

Thus, advantageously, a system for an improved verification of the authenticity of items is provided. In particular, by combining luminescent microparticles with focusing micro-optical elements forming a microlens array, the emission pattern becomes reliant on the three-dimensional micron scale alignment of microparticles and microlenses. Controlling the three-dimensional placement of luminescent microparticles registered to a microlens array over a large area is not achievable with current manufacturing technologies, thus providing a system for verifying the authenticity of items with labels having a strong protection against copying.

The image capturing device may be a camera of a mobile device such as a smartphone or tablet computer.

The illumination device may be the flash of the mobile device, such as the flash or light source of a smartphone or tablet computer. This allows the image capturing device and the illumination device being arranged on the same side of the label. Furthermore, the illumination device and the image capturing device may be part of the same device, i.e., the mobile device such as a smartphone or tablet computer. For example, the camera may be placed at the front or back side of the label.

In an advantageous manner, the micron-scale randomness can be read out on the macroscopic scale using the camera of a mobile device. The scattering or emission coming from bright microparticles forming a subset of the plurality of microparticles is coupled out of the label allowing it to be imaged on the camera. A bright microparticle occurs when a focus of a micro-optical element and a microparticle substantially or fully overlap, and results in a region of pixels on the image capturing device sensors with values over a background threshold. The regions of pixels with values over a threshold are related to the unique pattern of bright microparticles.

The image capturing device may be configured to acquire a plurality of test optical images of the label for several illumination angles and/or several positions of the illumination device with respect to the label, wherein the authenticity verification device may be configured to verify authenticity of the items by comparing the plurality of test optical images with a plurality of reference optical images.

Additional security to the labels may be provided by the dependence of the captured pattern of bright microparticles on the conditions of the illumination, e.g., the incidence angles of the incident illumination light. The illumination may be performed from at least one incidence angle, but preferably from multiple different angles. By means of the image capturing device, at least one test optical image, preferably multiple test optical images, may be captured for each of the different incidence angles. For each incidence angle, the test optical images may be compared with reference optical images in order to verify the authenticity of an item the label is attached to.

The change of the luminescence pattern, as a function of incidence angles and/or position of the excitation source, and/or position of the image capturing device, can be exploited to make these labels virtually unclonable. Whereas a label without a microlens array that is doped randomly with luminescent microparticles could be unique (the spatial arrangement of the particles could provide a unique fingerprint), it would theoretically still be possible to clone. The emission pattern of a sample could be read out, and the sample could theoretically be duplicated by careful printing of luminescence microparticles onto/into a layer. However, by combining microparticles with focusing micro-optical elements forming, for example, a microlens array, the emission pattern as a function of incidence angle becomes even more reliant on the 3D micron scale alignment of microparticles and lenses of the microlens array. Controlling the 3D placement of luminescent microparticles registered to a microlens array over a large area is not achievable with current manufacturing technologies, giving the labels strong protection against copying. The plurality of reference optical images may be based on desired illumination and collection conditions, preferably, camera placement, sensor type, optical system such as camera lens and filters.

The system may comprise mechanical elements to control the relative positions and angles between the illumination device, the label, and the imaging device.

The authenticity verification device may be further configured to generate an authentication code based on the at least one test optical image and may be configured to verify authenticity of the items by comparing the authentication code with a reference code generated based on the at least one reference optical image.

The reference codes may be predetermined codes that may be stored in a reference database. The authentication code may be a digital code. The digital code may represent text, computer processor instructions, or any other data using for example a two-symbol system. The two-symbol system used may be "0" and "1" from the binary number system. The binary code may assign a pattern of binary digits, also known as bits, to each character, instruction, etc.

After fabrication, the manufacturer makes a set of images under desired and predetermined illumination conditions and collection conditions, e.g., camera placement and incidence angles of illumination, sensor type, optical system such as camera lens and filters. From these images a unique digital code can be created, representing the unique pattern of bright microparticles under given illumination and excitation conditions.

The label can also be assigned a serial number. Fiducial marks can also assist the generation of the digital code from the acquired images. These images and/or digital code will be referred to as the reference. An example of a possible digital code would be a bit string with length equal to the number of focusing micro-optical elements, for examples microlenses in a microlens array. The order of the bit string would correspond to an ordered sequence of the microlenses in the array. Bright emission under a microlens would lead to a "1" being placed in the bit corresponding to that microlens. Other bits would be set to "0". The pixel area on the camera sensor that corresponds to each microlens could be identified with the aid of fiducial markers on the label. The spacing of the micro-optical elements can be designed so that adjacent microlenses are projected onto easily distinguishable pixel regions of the desired camera system (including smartphone cameras).

However, the digital code need not rely on creation of an ordered bit string described above. It could also be chosen to represent the point pattern in other ways, e.g., integral or Moire imaging based on microlens arrays and printed image layers.

In the field, a user makes an image or set of images under specific illumination conditions, in particular incidence angles, and collection conditions which might be provided by the manufacturer. These images, or a digital code generated from these images, are then compared against the reference. These will be referred to as the test. Comparison of test and reference could involve searching through a database of many references, or only a single reference based on serial marking of the label. The reference may be maintained in a database, or shared with the label. Visual or algorithmic inspection of the test and reference allows the authenticity of the label to be established.

The image capturing device may comprise one or more color or monochrome digital sensors, for example, as those found in a smartphone camera. Optical filters may be used to limit the sensitivity of the imaging digital sensors to given wavelength ranges. The acquisition time of the imaging sensors may be controlled relative to the modulation of the excitation sources. The imaging sensors may be selected so that the emission from a volume under each focusing micro-optical element is separated into an identifiable region of pixels on the imaging device. To perform this assignment, fiduciary markings on the label may be used. A digital code may be generated, wherein bit values correspond to whether a bright emission event occurred under a given micro-optical element, such as a microlens. One or more bits per microlens may be used. Multiple bits per microlens may be used for example when on multiple types of particles are used or relative brightness is considered. The digital code may be generated on the basis of the results of one image sensor, or the combination of the results of multiple image sensors.

The imaging sensors may also be chosen so that the volume under a single micro-optical element or lens cannot be assigned to a unique pixel area. In this case, a digital code can be generated from one or more images based on an analysis of the point patterns present in the images. An analysis that is invariant to affine transformations of the image can be selected.

In order to establish whether a label is genuine or not, the patterns measured in the field (preferably for several incidence angles) must be compared against those characterized after creation and stored securely by the manufacturer. If the label is introduced into a readout apparatus in a registered fashion (i.e., the pixel areas on the sensor from emission caused by each of the micro-optical elements would be known) then the generation of a digital code from the image is straightforward. A string of bits could be generated whose length is equal to the number of microlenses in the following fashion. A binary matrix based on the size of the micro-optical element array could be generated wherein a "1" in a given matrix location would indicate that the emission from the area corresponding to that lens in the microlens array was over a threshold. This matrix could then be converted into a binary string, and compared with the legitimate string. This could be repeated at several incidence angles, and if the difference between the collected and legitimate strings were below a cut-off value, the label is considered legitimate.

In terms of uniqueness, a simple estimation can be presented as follows. If it is assumed that a 10x10 focusing micro-optical element array is made and coupled with a microparticle layer so-doped that 50 of the lenses are expected to show bright emission for a given incidence angle then there would be $\binom{100}{50} \approx 10^{29}$ different unique strings that could be created. If the label is measured at multiple angles, the number of unique label is further increased. Therefore, with reasonably sized micro-optical element arrays, large numbers of products can be uniquely marked. The probability of creating the same label twice at random can be made vanishingly small.

The illumination device may comprise a light emitting diode such as that provided by a smartphone flash. Alternatively, the illumination may comprise a laser diode, or a combination of multiple light emitting and laser diodes. The illumination spectrum can contain multiple peaks to selectively excite one or more luminescent microparticles. The intensity and spectrum of the excitation light can be modulated with time. Excitation can take place at a wavelength in the range from 370 nm to 1600 nm. Excitation may take place in the range from 400 to 520 nm, preferably at 450 nm. Excitation may also take place in the range from 370 to 820 nm, preferably at 450 and 600 nm. Excitation may also take place in the range from 890 to 1025 nm, preferably at 940 nm. Excitation may also take place in the range from 950 and 1020 nm, preferably at 980 nm. The illumination intensity should exceed $10 \mu W/cm^2$ at a surface of the label.

According to yet a further aspect, a method of verifying authenticity of items is provided, the method comprising the steps of:

- attaching at least one label according to the initially described aspect;
- capturing, by means of an image capture device, scattering and/or emission of light coming from the luminescent and/or scattering microparticles;
- acquiring at least one test optical image of the label; and
- verifying, by means of an authenticity verifying device, authenticity of the item by comparing the at least one test optical image with at least one reference optical image.

The system for verifying authenticity of items described above might be used for performing the steps of the method of verifying authenticity of items. The method may further comprise illuminating, by means of an illumination device, the label so as to excite and/or illuminate the luminescent and/or scattering microparticles. The method may further comprise arranging the image capture device and the illumination device on the same side of the label. The method may further comprise acquiring, by means of the image capturing device, a plurality of test optical images of the label for different illumination incidence angles and/or positions of the illumination device with respect to the label, and verifying, by means of the authenticity verifying device, authenticity of the items by comparing the plurality of test optical images with a plurality of reference optical images. The method may further comprise verifying, by means of the authenticity verifying device, authenticity of the items by comparing authentication codes generated based on the at least one test optical image with a reference code generated based on the at least one reference optical image.

Further aspects, features and embodiments of the present disclosure will be described, by way of example, in conjunction with the following drawings.

Figs. 1A and 1B      show a side view and a top view of an embodiment of a label for verifying authenticity of items,

Figs. 2A to 2C      show the label of Figs. 1A and 1B under a first illumination condition of collimated light and three different incidence angles (0° in Fig. 2A, -5° in Fig. 2B, and +5° in Fig. 2C),

Figs. 3A and 3B      show the label of Figs. 1A and 1B under a second illumination condition of a distant point source above the center micro-optical element (Fig. 3A) and above the right micro-optical lens (Fig. 3B),

Figs. 4A to 4C      show a side view of a further embodiment of a label for verifying authenticity of items and its respective illumination and emission behavior,

Figs. 5A to 5C      show a side view of yet a further embodiment of a label for verifying authenticity of items and its respective illumination emission behavior,

Figs. 6A to 6C      shows a schematic of light incident onto the microparticle layer and scattered by the microparticles for the embodiments shown in Figs. 1A to 5C,

Figs. 7A and 7B      show a measurement apparatus comprising a holding element holding a label for verifying authenticity of items and its respective emission pattern from the microparticles varying with the incidence angle (0° in Fig. 7A and 10° in Fig. 7B) of the incoming light,

Figs. 8A and 8B      show a method for comparing test and reference images without any need for label registration. Fig. 8A shows two examples of maximum number of votes achieved when comparing two different lists of points, and Fig. 8B shows a comparison for the maximum number of votes achieved,

Fig. 9      shows an illustration of relevant parameters of a label for verifying authenticity of items that are relevant for the relationship between the micro-optical element design and microparticle number density, and

Fig. 10      shows an illustration of the estimated microparticle number density $N_p$ from the focal volume $V_{focal}$ and the volume of a microparticle.

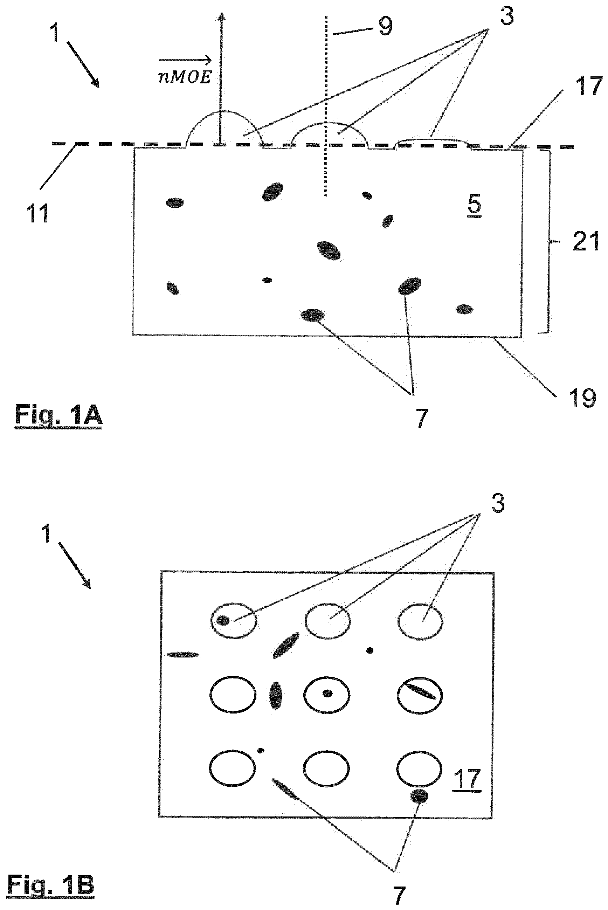

Fig. 1A and 1B show an embodiment of a label 1 for verifying authenticity of items. This label 1 is configured to be attached to items (not shown). The label 1 comprises a plurality of focusing micro-optical elements 3 and a microparticle layer 5 comprising a plurality of luminescent and/or scattering microparticles 7.

Each of the focusing micro-optical elements 3 has an optical axis 9. The focusing micro-optical elements 3 are arranged in a micro-optical element plane 11 such that angles between the optical axis 9 of each of the focusing micro-optical elements 3 and a normal direction $\overrightarrow{nMOE}$ of the micro-optical element plane 11 is below 60°. In the embodiment shown in Fig. 1A, the angle between the optical axis of the micro-optical element 3 and normal direction $\overrightarrow{nMOE}$ of the micro-optical element plane 11 is 0°.

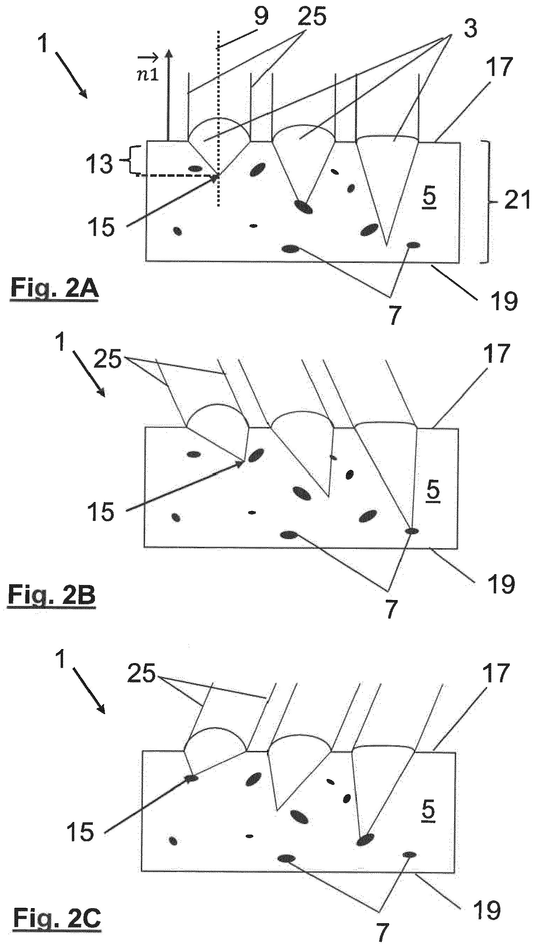

The focusing micro-optical elements 9 are converging lenses having positive optical power, wherein each of the focusing micro-optical elements 9 has a focal length 13 and being configured to focus parallel beams incident light travelling along the optical axis 9 of the micro-optical element 3 to a focus 15 (see Figs. 2A). The focal length 13 is the distance along the optical axis 9 from the focus 15 to a principal plane of the micro-optical element 3 on the side of the focus 15, when the optical characteristics of micro-optical element 3 are approximated by the thick lens approximation and taking the refractive index of the material into account.

The plurality of focusing micro-optical elements 3 may be arranged in a regular lattice pattern. Fig. 1B shows nine micro-optical elements 3 being equidistantly arranged in a regular lattice pattern being matrix-like and having three columns and three lines.

The microparticle layer 5 has a first surface 17 facing the micro-optical element plane 11 and a second surface 19 facing away from the micro-optical element plane 11. A normal direction $\overrightarrow{n1}$ of the first surface is substantially parallel to the normal direction $\overrightarrow{nMOE}$ of the micro-optical element plane 11. In areas between the micro-optical elements 3, the first surface 17 and second surface 19 are substantially flat, and the normal directions of the first and second surfaces 17, 19 are substantially parallel. The distance 21 between the first and second surfaces 17, 19 in the normal direction thereof is the thickness of the microparticle layer 5. The focusing micro-optical elements 3 may be arranged in a micro-optical element layer facing the first surface 17 of the microparticle layer 5.

The luminescent and/or scattering microparticles 7 can, for example, be up-conversion microparticles made from a phosphor or, alternatively, from a gadolinium oxysulphide host and doped with a near-infrared sensitizer such as ytterbium and a visible emitter such as erbium.

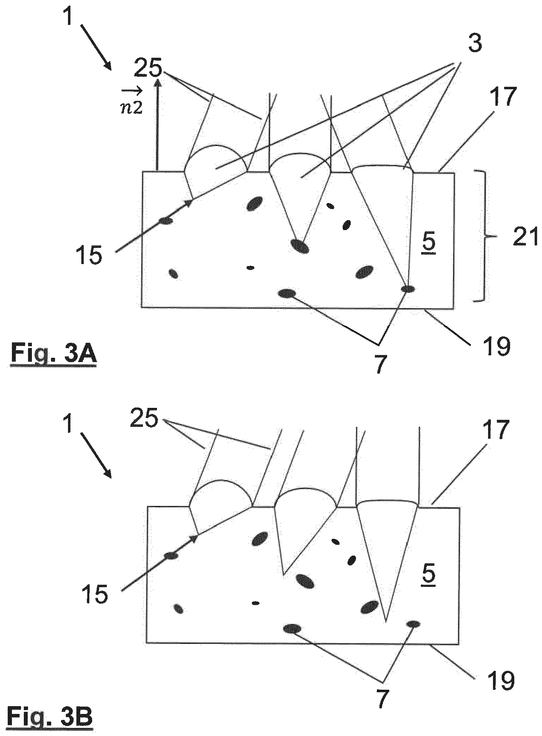

Figs. 2A to 2C schematically show the label 1 under a first illumination condition of collimated light 25 and three different incidence angles (0° in Fig. 2A, -5° in Fig. 2B, and +5° in Fig. 2C). Figs. 3A and 3B show the label 1 under a second illumination condition of a distant point source above the center micro-optical element (Fig. 3A) and above the right micro-optical lens (Fig. 3B). All focusing micro-optical elements 3 are designed and arranged such that, for the given illumination condition, the focus 15 of each focusing micro-optical element 3 is located in the microparticle layer 5.

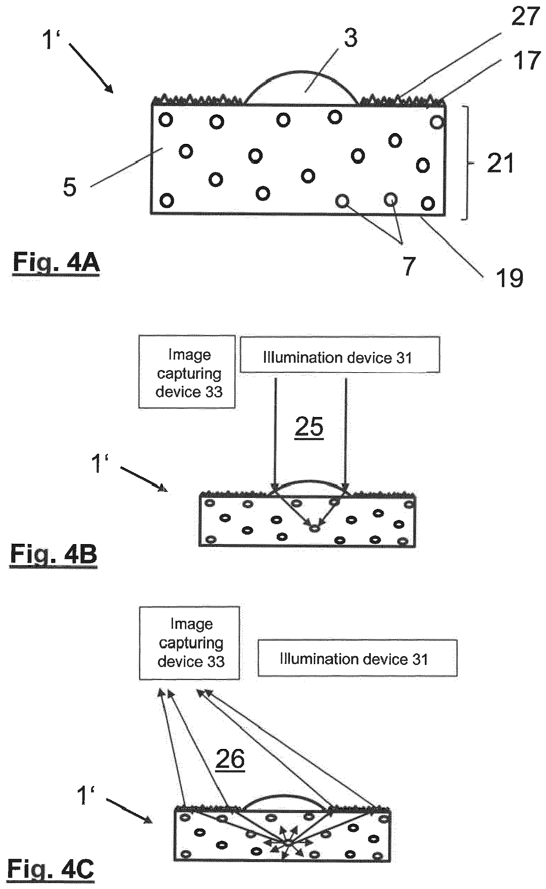

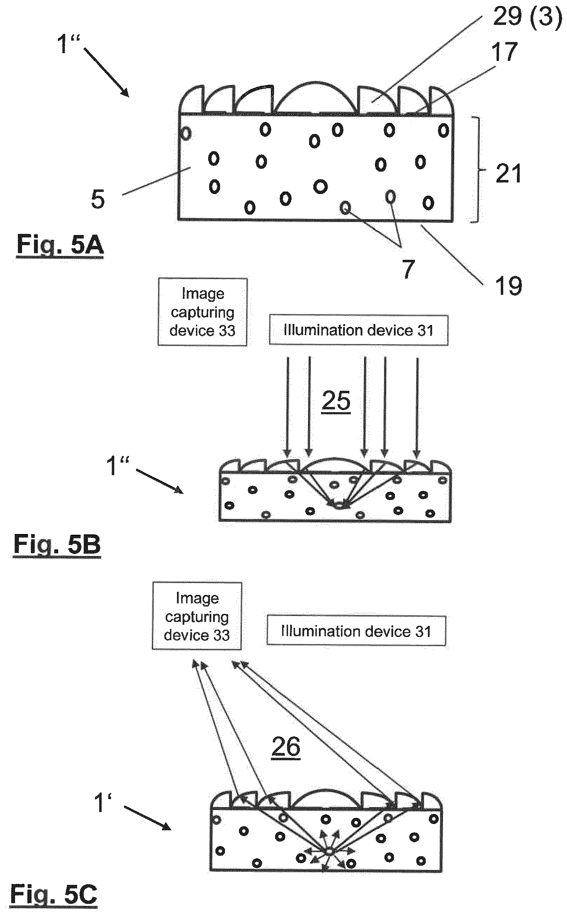

The plurality of focusing micro-optical elements 3 and the microparticle layer 5 are arranged so that at least a part of light emitted and/or scattered from the plurality of luminescent and/or scattering microparticles 7 reaches the plurality of focusing micro-optical elements 9 (see, e.g., Figs. 4C and 5C).

As shown in Figs. 2A to 2C, depending on the incidence angle, the foci of the focusing micro-optical elements 3 shift and coincide with an entirely new subset of microparticles 7. The incidence angle of the incident illumination light 25 is the angle between the normal direction direction $\overrightarrow{n1}$ of the first surface 17 and the propagating direction of the parallel incident illumination light 25. The normal direction $\overrightarrow{n1}$ of the first surface 17 corresponds to the direction of the optical axis of the micro-optical elements 3. Only those microparticles 7 located at positions substantially or fully coinciding with the foci 15 of the focusing micro-optical elements 3 will contribute to the optical pattern of bright microparticles.

Due to the micron-scale randomness of the positions of the microparticles 7 in the microparticle layer 5, light detected by an image capturing device (not shown) originating from some of the microparticles 7 will have light intensities being above the detection threshold of a sensor of the image capturing device, while light originating from "misaligned" microparticles 7 may have light intensities below the detection threshold. Accordingly, due to the random distribution of the microparticles 7, only some of the focusing micro-optical elements 3 will contribute to an image captured by the image capturing device, whereas other focusing micro-optical elements 3 will not contribute to the detected pattern in the image. Accordingly, the detected pattern of light is characteristic for the label 1 and is unique.

Thus, a label 1 is provided which is virtually unclonable due to random micron-scale random distribution of the microparticles 7 during the manufacturing process of the label 1, which results in a 3D alignment of microparticles 7 and focusing micro-optical elements 3 that cannot be reproduced purposefully in the manufacturing process and is unique for each label 1. This unique 3D alignment gives rise a unique detectable light signal (i.e., light pattern of bright microparticles) that can be detected on the macroscopic scale.

The label 1 shown in Figs. 1A to 3B might be produced by embossing or imprinting the micro-optical elements 3 on the microparticle layer 5 (not shown). In particular, the micro-optical elements 3 may be directly embossed into the microparticle layer 5 by means of a forming tool and/or stamping tool. Alternatively, the micro-optical elements 3 can be printed directly, e.g., by means of a 3D-printer, on the microparticle layer 5. The micro-optical elements 3 and the microparticle layer 5 may also be laminated together.

Figs. 4A to 4C show a label 1' for verifying authenticity of items and its respective illumination and emission behavior further comprising random surface roughness 27. Figs. 5A to 5C show a label 1" for verifying authenticity of items and its respective illumination emission behavior comprising extended focusing micro-optical elements 3 such as a Fresnel lens 29. The labels 1', 1" are illuminated by an illumination device 31 so that the micro-optical elements 3 are illuminated with collimated light 25 that is focused to a focus by the micro-optical element 3 (see Fig. 4B), such as by the Fresnel lens 29 (see Fig. 5B). The random surface roughness 27 and Fresnel lens 29 increase the collection of emitted light 26, i.e., the light emitted by a bright microparticle 7 by an image capturing device 33 (see Figs. 4C and 5C). Light rays scattered or emitted from a bright microparticle 7 can reach the image capturing device more efficiently due to the random surface roughness 27 and micro-optical elements 3, 29.

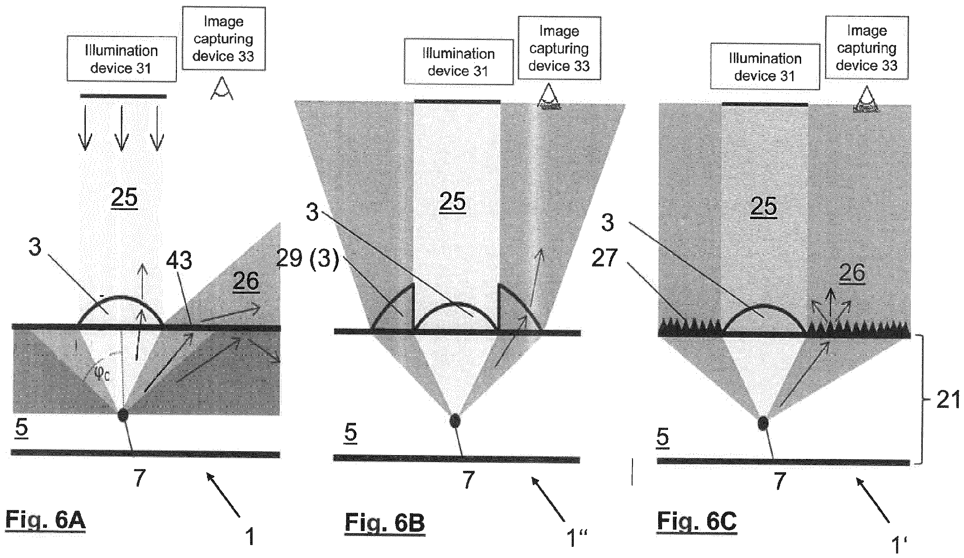

Fig. 6A shows a schematic representation of light incident onto the microparticle layer 5 and scattered by one of the microparticles 7 for the embodiment of a label 1 not including surface textures as shown, e.g., in Figs. 1A to 3B. Fig. 6B shows a schematic representation of light incident onto the microparticle layer 5 and scattered by one of the microparticles 7 for the embodiment of a label 1" including a Fresnel lens 29 as shown in Figs. 4A to 4C. Fig. 6C shows a schematic of light incident onto the microparticle layer 5 and scattered by one of the microparticles 7 for the embodiment of a label 1' including random surface roughness 27 as shown in Figs. 5A to 5C.

Figs. 6A to 6C show that, when the illumination device 31 and the image capturing device 33 are arranged on the same side of the label 1, 1', 1", for example when using a smartphone for illuminating and detection, the focusing optics influence the detection of the luminescent light. In the case for a smartphone, the image capturing device 33 is positioned near the illumination device 31 so that there is only a small distance between the illumination device 31, i.e., the smartphone flashlight, and the image capturing device 33, i.e., the smartphone camera. Fig. 6A shows that three paths of the luminescent light may be distinguished:

1. The luminescent and/or scattering microparticle 7 lies in the focus of the focusing micro-optical element 3 for a predetermined illumination condition, in particular incidence angle of the illumination light. Thus, incident light 25 onto the microparticle layer 5, coming from inside the microparticle layer 25, is collimated towards the illumination source 31. It does not reach the imaging capturing device 33.

2. Light incident upon a planar surface 43 of the microparticle layer 5 with incident angles below the critical angle $\varphi_C$ is refracted to larger angles in air and does not reach the image capturing device 33 close to the illumination device 31. The planar surface 43 might be that part of the first surface 17 of the microparticle layer 5 that does not face the focusing micro-particle elements 3 in the micro-optical element layer.

3. Light incident upon the planar surface, with incident angles larger than the critical angle $\varphi_C$, is trapped by total internal reflection and does not reach the image capturing device 33.

Figs. 6B and 6C show that a surface texture, e.g., a Fresnel lens 29 or random surface roughness 27, may enable a reliable observation of the emitted light 26 in front side detection. The purpose of this surface texture is to redirect luminescent light towards the image capturing device 33.

The surface texture might be configured as a second micro-optical element, preferably in the form of a Fresnel lens 29, that is positioned around a first central micro-optical element 3 (see Fig. 6B). This Fresnel lens 29 may have a long focal length. As a consequence, it does not focus light inside the microparticle layer 5, thus, illumination of luminescent particles 7 is only achieved with the central micro-optical element 3. Since the luminescent particles 7 do not lie in the focus of the Fresnel lens 29, emitted light is not perfectly collimated, but diverges. This allows detection of the emitted light 26 by the image capturing device 33.

As an alternative to the ring micro-optical element, random surface roughness 27 surrounding the central micro-optical element 3 might be used. The random surface roughness 27 might comprise rough surfaces which scatter light in all directions. The emitted light 26 emitted by the luminescent particle 7 is scattered at the surface. A fraction of the emitted light 26 will be incident on the image capturing device 33, independent of its position.

Albeit not shown in Figs. 1A to 5C, it is conceivable that the microparticle layer 5 is created as a first layer, wherein a second, transparent layer without any microparticles 7 is created above the microparticle layer 5. In particular, the second, transparent layer may be arranged on the microparticle layer 5 facing its first surface 17. Then, a third layer, e.g., the micro-optical element layer and/or the surface textures 27, 29 may be created on the second, transparent layer by laminating or embossing.

A preferred embodiment of a label might be implemented as follows:

A hexagonal close-packed array of 240 focusing micro-optical elements forming a lens array may be fabricated by two-photon lithography. This array can be written into a commercial photo-resin (for example, IP-S from nanoscribe GmbH) on a 1 mm-thick glass substrate. The micro-optical elements may have a radius of curvature of 625 $\mu$m and a base diameter of 250 $\mu$m. Such a lens array can then be laminated onto a 2 mm thick slab of polydimethylsiloxane (PDMS) loaded with 500 ppm of up-conversion (UC) microparticles. The microparticle may be made from a gadolinium oxysulphide host and doped with an ytterbium (NIR sensitizer) and erbium (visible emitter): $Gd_2O_2S$:Yb,Er. The distribution of diameters of the microparticles may be centred around 10 $\mu$m. The micro-optical element array may be placed onto the PDMS layer.

A system for verifying authenticity of items comprises at least one label 1, 1', 1", 1'", an image capturing device 33 configured to capture light being emitted and/or scattered from the luminescent and/or scattering microparticles 7 to acquire at least one test optical image 35, 36 of the label 1, 1', 1", 1'"; and an authenticity verification device (not shown) configured to verify authenticity of the items by comparing the at least one test optical image 35, 36 with at least one reference optical image.

The system may further comprise an illumination device 31 configured to illuminate the label 1, 1', 1", 1'" so as to excite and/or illuminate the luminescent and/or scattering microparticles 7. The image capturing device 33 can be a camera of a mobile device such as a smartphone or tablet computer. The image capturing device 33 is configured to acquire a plurality of test optical images 35, 36 (see Figs. 6A and 6B) of the label 1, 1', 1", 1'" for several illumination (incidence) angles and/or several positions of the illumination device 31 with respect to the label 1, 1', 1", 1'". The authenticity verification device is configured to verify authenticity of the items by comparing the plurality of test optical images 35, 36 with a plurality of reference optical images. The authenticity verification device is further configured to generate an authentication code based on the at least one test optical image 35, 36 and is configured to verify authenticity of the items by comparing the authentication code with a reference code generated based on the at least one reference optical image.

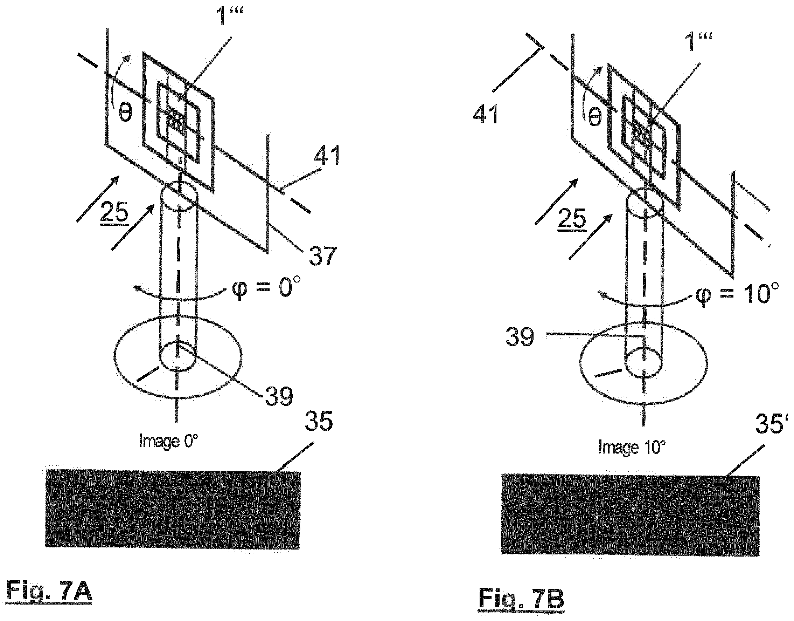

Figs. 7A and 7B show a label 1'" placed in a measurement apparatus, wherein the label 1'" is held in a holding apparatus 37, e.g., a label holder, respectively. The holding apparatus 37 is configured to control different angles of rotation $\varphi$, $\theta$. The holding apparatus may be rotated around a substantially vertical rotation axis 39 with angle of rotation $\varphi$, and/or around a substantially horizontal rotation axis 41 with angle of rotation $\theta$. Thus, the holding apparatus 37 is capable of controlling two axes of rotation 39, 41. In particular, Fig. 7A shows the holding apparatus at an angle of rotation $\varphi = 0°$, and Fig. 7B shows the holding apparatus at an angle of rotation $\varphi = 10°$. The respective test optical images 35, 36 of the label 1'" that are acquired in dependence of the angel of rotations are also shown in Figs. 7A and 7B. The incident light 25, e.g., near infrared (NIR) light that is a collimated 980 nm beam, impinges on the label 1'" through the micro-optical elements 3 at different incidence angles, respectively. The emission from the microparticles 7 may be measured by the image capturing device 33, e.g., a camera, wherein optical filters may be used to block the excitation light (not shown). Since multiple luminescent and/or scattering microparticles 7 are present in the label 1'", each having a unique emission wavelength, a test optical image 35, 36 can be captured by the image capturing device 33 in dependence of the angle of rotation $\varphi$.

Figs. 7A and 7B show how the emission pattern from the microparticles varies with the incidence angle of the illumination light when the entire array with focusing micro-optical elements 3 lens is illuminated with excitation light. However, only a small fraction of the micro-optical elements 3 focus the illumination light 25 on a subset of the microparticles 7. This leads to the dark optical test images 35, 36 with a few bright spots, corresponding to micro-optical elements 3 that focus onto a microparticle 7 for the given illumination condition. The subset of micro-optical elements 3 that focus onto a microparticle 7 is angle dependent. This leads to an angle-dependent emission pattern that is intimately related to the 3D distribution of the microparticles 7 relative to the micro-optical elements 3. This arrangement is randomly created during label formation, and it is not possible to reproduce this arrangement with existing manufacturing methods. This makes the labels 1, 1', 1", 1'" virtually unclonable.

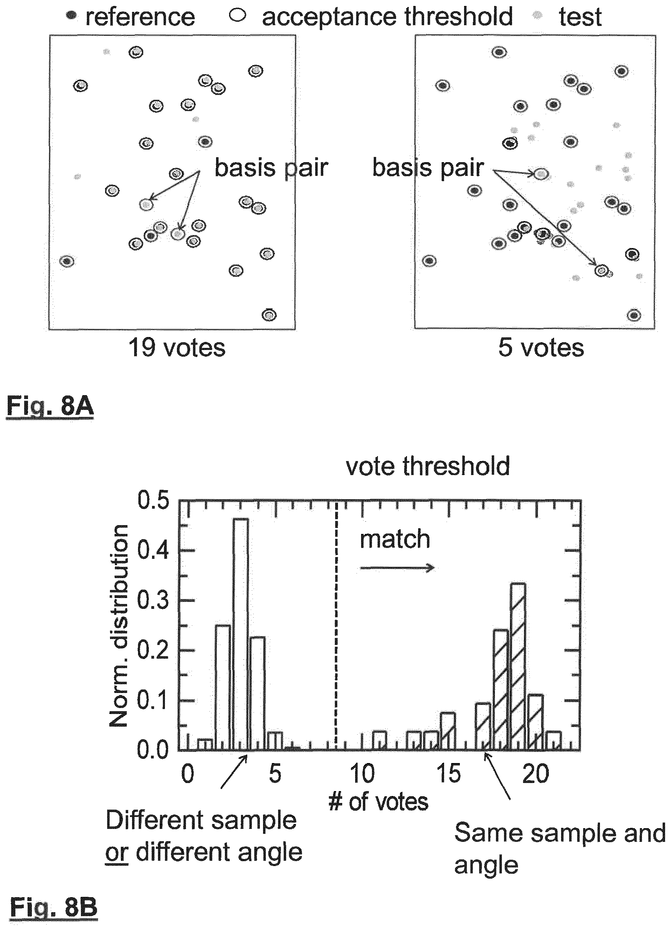

Figs. 8A and 8B demonstrate an example method for comparing optical test and reference images without any need for label registration. Fig. 8A shows two examples of maximum number of votes achieved when comparing two different lists of points. A close match was achieved in the example on the left, thus leading to a large number of votes. Even in the best case, the point clouds do not match in the example on the right, thus leading to a small number of votes. Fig. 8B shows a comparison for the maximum number of votes achieved, when comparing each of the 27 images to all other 26 images. Every sample, illuminated from the same incidence angle, received at least 11 votes in the other two trials. At most 6 votes were obtained in all other cases.

Based on Figs. 8A and 8B, it will be shown that a method based on the concept of geometrical hashing can accurately compare measured with "true" images. This merely establishes that existing comparison algorithms are sufficient and present no limitation to allow the above described labels 1, 1', 1", 1'" for verifying authenticity of items which are a combination of the micro-optical elements 3 and a microparticle layer 5 to be used for the intended anti-counterfeiting application. Three labels were fabricated. Then, three angles were measured for a label corresponding to a first trial. The label was then removed and replaced in system and the same angles measured again corresponding to the second trial. Then the label was again removed, replaced, and re-measured corresponding to the third trial. As a result, 27 images (three angles, three samples, three trials) are compared using an exemplary algorithm described in the following steps:

1. Pre-processing of images. Firstly, a background image is subtracted from all images, and standard procedures for reducing image noise was applied.

2. Identification of intense emission regions. A threshold (determined with reference to the dark noise of the acquisition system) is used to transform the greyscale into binary images, with regions of '1' representing regions of intense emission. The centroid and area of each bright region is found. The sum of the pixel values in each of these areas in the original image is found, and the centroids sorted from that corresponding to the brightest total emission to the weakest. The sorted centroid positions obtained from the 27 images are stored in separate lists and the lists are compared to one another. Only the brightest 24 points (10% of the number of micro lenses) are considered.

3. Geometric transformation of the reference image. In order to compare the pattern of 24 bright points obtained in the previous step, new lists of point locations are generated that are invariant to affine transformations. This means that bright point patterns could be compared irrespective of camera rotation and position. The new point location lists are made by pairwise selecting each possible combination of 2 points in the image as a new "basis". This is illustrated in Fig. 8A. Based on the new basis, the remaining 22 points are each assigned a new location. This results in 552 lists of the locations of 22 points that define the reference point cloud.

4. Image comparison. The 27 images are compared one to one. In this comparison one of the images is defined as the 'test' image, and a single list of 22 points is generated by taking the brightest 2 points to form the basis in the test image. The locations of these 22 points in the test image are then compared to each of the 552 lists of locations for the other image, the 'reference' image. In each case the minimum distance between points in the reference and test image are calculated. If this distance is smaller than a tolerance factor, the points are considered to match and a 'vote' is cast that the images are the same. The number of votes for the one of the 552 lists with the most votes is recorded. If this number of votes is over a threshold the images are defined as 'matching'. The threshold can be determined for a given label design by (in the initial calibration) comparing the number of votes cast between matching images (same label, same angle) and non-matching images (different label, or same label but different angle). Such a distribution is shown in Fig. 8B. Whereas less than 5 votes are cast for nonmatching images, more than 10 are cast for matching images. In this instance a threshold of 8 votes is appropriate for assigning 'same' and 'different' images.

Steps 1 to 4 describe a preferred method on how the images could be compared. Alternatively, it is possible to determine whether the emission under each micro-optical element 3 was 'on' or 'off'. This would then give a binary sequence with a length of the total number of micro-optical elements in the array. Comparison of the distance between two such binary sequences would be easily possible with standard algorithms. This approach of assigning an "on" or "off" state to each micro-optical element 3 in the array is likely the most robust implementation.

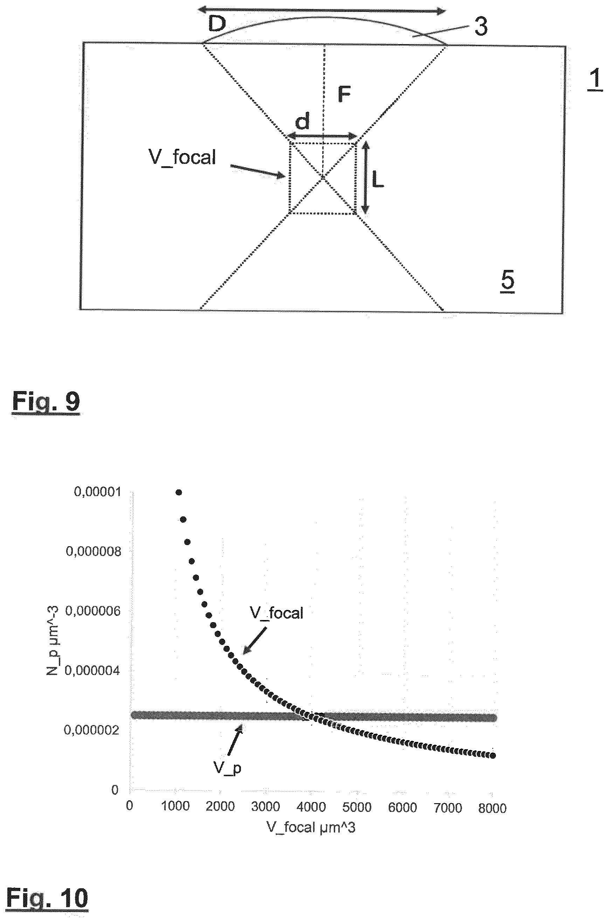

Fig. 9 shows a schematic illustration of a focal volume $V_{focal}$ in the microparticle layer 5 of the label 1. $D$ is the maximum diameter of the micro-optical element 3 perpendicular to the optical axis of the micro-optical element, i.e, the maximum diameter of the micro-optical element in the XY-plane. $F$ is the focal length of the micro-optical element, $d$ is the lateral minimum focal point diameter resulting from diffraction in the XY-plane. $L$ is the axial focal length along the optical axis (Z-axis) over which the minimal lateral focal point diameter d is maintained. As shown above, the minimal focal volume $V_{focal}$ resulting from diffraction can be approximated by

$$V_{focal} = \pi \left(\frac{d}{2}\right)^2 L = \frac{16\lambda^3 F^4}{n^3 D^4}$$

Finally, Fig. 10 shows an example of the estimated microparticle number density $N_p$ in the microparticle layer 5 for a fixed microparticle volume $V_p$ of 4000 $\mu m^3$ and a varying focal volume $V_p$ from 100 to 8000 $\mu m^3$. The graph labelled $V\_focal$ illustrates equation (i). The graph labelled $V\_p$ illustrates equation (ii).

Two separate regimes and equations (i) and (ii) for the estimation of microparticle number density $N_p$ are necessary. The curves for $V\_p$ and $V\_focal$ cross when the focal volume $V_{focal}$ and particle volume $V_p$ are equal. The particle density $N_p$ should be estimated from the lower of the two functions, i.e., when the focal volume $V_{focal}$ is smaller than the particle volume $V_p$, the curve based on the particle volume $V_p$ should be used (equation (ii)). When the focal volume $V_{focal}$ is larger than the particle volume $V_p$, the particle volume $N_p$ must be reduced, and the curve based on the focal volume $V_{focal}$ is then used (equation (i)). Here a mean probability of p=0.01 was selected, and the particle volume $V_p$ was held constant at 4000 $\mu m^3$.

According to an illustrative example, the micro-optical element 3 in Fig. 9 may have a diameter $D$ of 200 $\mu m$ and a focal length $F$ of 600 $\mu m$. For an illumination device having a wavelength $\lambda$ = 550 nm and a desired probability $p$ of 0.01 in a 1 mm thick microparticle layer 5 of Fig. 9, the minimum focal point diameter d is 2 $\mu m$, the focal depth L is 50 $\mu m$, and $V_{focal}$ is 200 $\mu m^3$. The change in the position of the focus in the XY plane with a 2° change in incidence angle from normal (i.e., from the optical axis) is 21 $\mu m$. To keep the pattern stable with 2° repositioning accuracy a particle size of 20 $\mu m$ could therefore be selected. The particle volume $V_p$ is calculated as follows: $V_p =$

$$\frac{4}{3}\pi\left(\frac{d_p}{2}\right)^3 = 4000 \text{ μm}^3.$$ Since $V_p$ is larger than $V_{focal}$, equation (ii) is used to calculate the microparticle number

density $N_p$ as follows: $$N_p = \frac{0.01}{V_p} = 2.4 \times 10^{12} \text{ m}^{-3}.$$

The volume fraction of particles in the microparticle layer 5 can be calculated by $N_p V_p$, where $V_p = \frac{4}{3}\pi\left(\frac{d_p}{2}\right)^3$, In this case the volume fraction of the particles would be 1%. As the density of microparticle is a factor of 10 higher than the density of the polymer host, this would correspond to a 0.1% wt. addition of microparticles to the host polymer.

Accordingly, a label 1, 1', 1", 1''' is provided with additional security due to the dependence of the pattern of bright microparticles 7 on the conditions of the illumination, i.e., incidence angles, polarization, and divergence of the light. In an advantageous manner, the micron-scale randomness of the distribution of the microparticles 7 can be read out on the macroscopic scale using an image capturing device 33 such as a camera of a smartphone. Thus, the label 1, 1', 1", 1''' is virtually unclonable due to random micron-scale alignment during a manufacturing process that cannot be reproduced purposefully but produces a signal due to this alignment that is easily read on the macroscopic scale without the need for microscopy.

The security of the label 1, 1', 1", 1''' is gained through the random micron-scale alignment between the microparticles 5 and the micro-optical elements 3. This alignment is unique for each label 1, 1', 1", 1''' so that it is virtually impossible to clone or purposefully reproduce. The read out at the macroscopic scale is possible as the light emitted or scattered from a bright particle is possible to be read out as a point pattern with an image capturing device 33 having focal lengths such as those found in smartphone cameras.

Combining robust microscopic security and macroscopic authentication, labels 1, 1', 1", 1''' are easy to create, easy to compare, and prohibitively difficult to counterfeit. Thus, a low-cost label is provided that is easy to read in the field, i.e., via a low-cost illumination source and camera module including those provided by a smartphone flash and camera.

**List of Reference Numerals**

| | |
|---|---|
| 1, 1', 1", 1''' | label for verifying authenticity of items |
| 3 | focusing micro-optical elements |
| 5 | microparticle layer |
| 7 | luminescent and/or scattering microparticles |
| 9 | optical axis |
| 11 | micro-optical element plane |
| 13 | focal length |
| 15 | focus |
| 17 | first surface of the microparticle layer |
| 19 | second surface of the microparticle layer |
| 21 | distance between first and second surfaces |
| 25 | incident light |
| 26 | emitted light |
| 27 | random surface roughness |
| 29 | Fresnel lens |
| 31 | illumination device |
| 33 | image capturing device |
| 35 | test optical image |

| 36 | test optical image |
| 37 | holding apparatus |
| 39 | vertical rotation axis |
| 41 | horizontal rotation axis |
| 43 | planar surface |

**Claims**

1. A label (1, 1', 1", 1''') for verifying authenticity of items, the label (1, 1', 1", 1''') being configured to be attached to items and comprising:

   a plurality of focusing micro-optical elements (3) and
   a microparticle layer (5) comprising a plurality of luminescent and/or scattering microparticles (7).

2. The label (1, 1', 1", 1''') according to claim 1, wherein the focusing micro-optical elements (3) are arranged in a micro-optical element plane (11), wherein the microparticle layer (5) has a first surface (17) facing the micro-optical element plane (11), wherein a normal direction ($\overrightarrow{n1}$) of the first surface (17) may be substantially parallel to the normal direction ($\overrightarrow{nMOE}$) of the micro-optical element plane (11).

3. The label (1, 1', 1", 1''') according to any one of the preceding claims, wherein the focusing micro-optical elements (3) are converging lenses having positive optical power, each of the focusing micro-optical elements (3) having a focal length (13) and being configured to focus light substantially travelling along the optical axis (9) of the micro-optical element (3) to a focus (15).

4. The label (1, 1', 1", 1''') according to claim 4, wherein at least some of the focusing micro-optical elements (3) are arranged such that foci (15) of the focusing micro-optical elements (3) are located in the microparticle layer (5).

5. The label (1, 1', 1", 1''') according to claim 2 or 4, wherein the microparticle layer (5) has a second surface (19) facing away from the micro-optical element plane (11), wherein a distance between the second surface (19) and a principal plane of the micro-optical elements is larger than the focal length (13) of each of the focusing micro-optical elements (3).

6. The label (1, 1', 1", 1''') according to any one of claims 3 to 5, wherein the plurality of micro-optical elements (3) and the microparticle layer (5) are configured such that a mean probability p for a microparticle being located in a focal volume $V_{focal}$ of a given micro-optical element is lower than 0.9, and is preferably in the range from 0.01 to 0.8, more preferably in the range from 0.01 to 0.6.

7. The label (1, 1', 1", 1''') according to claim 6, wherein the plurality of focusing micro-optical elements (3) and the microparticle layer (5) are configured such that a microparticle number density $N_p$ and the probability $p$ of a given focal volume $V_{focal}$ to be occupied by a microparticle (7) satisfy the equations

$$N_p = \frac{p}{V_{focal}} = p\frac{D^4}{8\lambda^3 F^4} \qquad if \qquad V_p < V_{focal}$$

and

$$N_p = \frac{p}{V_p} = \frac{3p}{2\pi d_p^3} \qquad if \qquad V_p > V_{focal},$$

wherein $V_p$ is a microparticle volume, $D$ is a diameter of a micro-optical element (3), $F$ is the focal length of the micro-optical element (3), $d_p$ is a diameter of the microparticle, and $\lambda$ is a wavelength of light of an illumination device.

8. The label (1, 1', 1", 1''') according to any one of the preceding claims, wherein the plurality of focusing micro-optical elements (3) is arranged in a regular lattice pattern or with arbitrarily placed positions or in relation to fiducial markers.

9. The label (1, 1', 1", 1''') according to any one of the preceding claims, wherein the microparticles (7) are inorganic or organic microparticles, for example, up-conversion microparticles and/or downshifting microparticles and/or persistent phosphorescence microparticles, and/or wherein the microparticles (7) are nanocrystal microparticles.

10. A system for verifying authenticity of items, the system comprising:

   at least one label (1, 1', 1", 1''') according to any one of the preceding claims;
   an image capturing device (33) configured to capture light being emitted and/or scattered from the luminescent and/or scattering microparticles (7) to acquire at least one test optical image (35, 35') of the label (1, 1', 1", 1'''); and
   an authenticity verification device configured to verify authenticity of the items by comparing the at least one test optical image (35, 35') with at least one reference optical image.

11. The system according to claim 10, the system further comprising:
   an illumination device (31) configured to illuminate the label (1, 1', 1", 1''') so as to excite and/or illuminate the luminescent and/or scattering microparticles (7).

12. The system according to claim 10 or 11, wherein the image capturing device (33) is a camera of a mobile device such as a smartphone or tablet computer.

13. The system according to any one of claims 10 to 12, wherein the image capturing device (33) is configured to acquire a plurality of test optical images (35, 35') of the label (1, 1', 1", 1''') for several illumination angles and/or several positions of the illumination device (31) with respect to the label (1, 1', 1", 1'''), and
   wherein the authenticity verification device is configured to verify authenticity of the items by comparing the plurality of test optical images (35, 35') with a plurality of reference optical images.

14. The system according to any one of claims 10 to 13, wherein the authenticity verification device is further configured to generate an authentication code based on the at least one test optical image (35, 35') and is configured to verify authenticity of the items by comparing the authentication code with a reference code generated based on the at least one reference optical image (35, 35').

15. A method of verifying authenticity of items, the method comprising the steps of:

   attaching at least one label (1, 1', 1", 1''') according to any one of claims 1 to 9 to an item;
   capturing, by means of an image capture device (33), scattering and/or emission of light coming from the luminescent and/or scattering microparticles (7) and acquiring at least one test optical image (35, 35') of the label (1, 1', 1", 1'''); and
   verifying, by means of an authenticity verifying device, authenticity of the item by comparing the at least one test optical image (35, 35') with at least one reference optical image.

**Fig. 1A**

**Fig. 1B**

Fig. 2A

Fig. 2B

Fig. 2C

1

3

25

$\overrightarrow{n2}$

17

21

15

<u>5</u>

19

**Fig. 3A**

7

1

25

17

15

<u>5</u>

7

19

**Fig. 3B**

**Fig. 4A**

**Fig. 4B**

**Fig. 4C**

**Fig. 5A**

**Fig. 5B**

**Fig. 5C**

Fig. 6A

Fig. 6B

Fig. 6C

Fig. 7A

Fig. 7B

EP 4 105 035 A1

● reference ○ acceptance threshold ● test

basis pair    basis pair

19 votes        5 votes

**Fig. 8A**

vote threshold

match →

Norm. distribution

# of votes

Different sample
or different angle

Same sample and
angle

**Fig. 8B**

**Fig. 9**

**Fig. 10**

Europäisches
Patentamt

European
Patent Office

Office européen
des brevets

# EUROPEAN SEARCH REPORT

**Application Number**

EP 21 17 9385

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/184581 A1 (WAVEFRONT TECH INC [US]) 26 October 2017 (2017-10-26) * paragraphs [0088], [0104], [0107], [0109], [0124], [0125]; figures 1A, 1B * ----- | 1-15 | INV. B42D25/324 B42D25/351 B42D25/36 B42D25/378 B42D25/382 B42D25/387 |

**TECHNICAL FIELDS
SEARCHED      (IPC)**

B42D

The present search report has been drawn up for all claims

| Place of search | Date of completion of the search | Examiner |
|---|---|---|
| Munich | 18 November 2021 | Achermann, Didier |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 21 17 9385

This annex lists the patent family members relating to the patent documents cited in the above-mentioned European search report.
The members are as contained in the European Patent Office EDP file on
The European Patent Office is in no way liable for these particulars which are merely given for the purpose of information.

18-11-2021

| Patent document cited in search report | Publication date | Patent family member(s) | Publication date |
|---|---|---|---|
| WO 2017184581 A1 | 26-10-2017 | CA 3015684 A1 | 26-10-2017 |
| | | CN 109070622 A | 21-12-2018 |
| | | EP 3405353 A1 | 28-11-2018 |
| | | KR 20180136937 A | 26-12-2018 |
| | | TW 201740146 A | 16-11-2017 |
| | | US 2018001692 A1 | 04-01-2018 |
| | | US 2021347194 A1 | 11-11-2021 |
| | | WO 2017184581 A1 | 26-10-2017 |

EPO FORM P0459

For more details about this annex : see Official Journal of the European Patent Office, No. 12/82